# EUROPÄISCHE PATENTSCHRIFT

(11) **EP 4 323 232 B1**
(45) Veröffentlichungstag und Bekanntmachung des Hinweises auf die Patenterteilung: **11.06.2025**
(21) Anmeldenummer: 22723089.3
(22) Anmeldetag: 14.04.2022
(51) Int. Cl.: B60N 2/015, B60N 2/02, B60N 2/01, B60N 2/04

(54) **FIXIERUNGSVORRICHTUNG FÜR DIE FIXIERUNG EINES OBJEKTS IN EINEM FAHRZEUG MITHILFE MINDESTENS EINES ÜBER EINE VERSTELLMECHANIK VERSTELLBAREN VERRIEGELUNGSELEMENTS**
FIXATION DEVICE FOR ATTACHING AN OBJECT WITHIN A VEHICLE BY USING AT LEAST ONE LOCKING ELEMENT BEING ADJUSTABLE BY MEANS OF AN ADJUSTING MECHANISM
DISPOSITIF DE FIXATION PUR FIXATION D'UN OBJET DANS UN VÉHICULE À L'AIDE D'AU MOINS D'UN ÉLÉMENT DE VERROUILLAGE RÉGLABLE À L'AIDE D'UN MÉCANISME DE RÉGLAGE

(30) Priorität: 16.04.2021 DE 102021203794
(43) Veröffentlichungstag der Anmeldung: 21.02.2024
(73) Patentinhaber: Brose Fahrzeugteile SE & Co. Kommanditgesellschaft, Coburg, 96450 Coburg (DE)
(72) Erfinder: WAZANINI, Mario, 96185 Steinsdorf (DE); BÄTZ, Stefan, 96484 Meeder (DE); BAUERNFEIND, Markus, 96450 Coburg (DE); STEGERER, Mario, 96163 Gundelsheim (DE)
(74) Vertreter: Maikowski & Ninnemann Patentanwälte Partnerschaft mbB
(86) Internationale Anmeldenummer: PCT/EP2022/060077
(87) Internationale Veröffentlichungsnummer: WO 2022/219140

(56) Entgegenhaltungen:
- EP-A2- 1 795 392
- WO-A2-2021/013730

## Beschreibung

Die vorgeschlagene Lösung betrifft eine Fixierungsvorrichtung zur Fixierung eines Objekts an einer Fixierungsfläche in einem Fahrzeug.

Bei der Fixierungsfläche kann es sich beispielsweise um eine Innenraumfläche des Fahrzeugs, wie z.B. eine Ladefläche des Fahrzeuginnenraums, handeln, an dem Innenraumobjekte, z.B. in Form von Fahrzeugsitzen, Tischen und/oder Mittelkonsolen, fixiert werden können. Beispielsweise aus der DE 10 2017 210 608 A1 ist es bekannt, derartige Innenraumobjekte nicht mechanisch geführt an der Innenraumfläche verstellbar auszuführen. Die die DE 10 2017 210 608 A1 schlägt in diesem Zusammenhang beispielsweise vor, eine Verstellung eines Innenraumobjekts über ein Luftpolster oder über eine Rollvorrichtung zu ermöglichen. Hierbei bleibt jedoch offen, an welchen Stellen eine bestimmungsgemäße Fixierung eines solchen Innenraumobjekts ermöglicht werden soll und wie eine solche Fixierungsposition gegebenenfalls vorgegeben ist.

Aus der DE 10 2004 046 070 A1 ist ferner eine Fixierungsvorrichtung für die Fixierung von Innenraumobjekten an einer durch eine Bodenplatte in einem Fahrzeug definierten Fixierungsfläche bekannt. Hierbei greifen stiftförmige Fixierungselemente in Form von Verriegelungszapfen in Löcher der Fixierungsfläche ein und können hieran verriegelt werden, um das Innenraumobjekt an der Fixierungsfläche zu fixieren. Die Fixierungselemente sind längsverschieblich an einem Innenraumobjekt gelagert und können, nach Positionierung des Innenraumobjekts, manuell in passende Löcher eingeführt und hieran verriegelt werden. Für die Positionierung eines Innenraumobjekts in unterschiedlichen Positionen ist eine Mehrzahl von Löchern als Fixierungsöffnungen für die Fixierungselemente vorgesehen, wobei die Löcher in einem Raster an der Bodenplatte angeordnet sind.

Eine gattungsgemäße Fixierungsvorrichtung für die Fixierung eines Objekts an einer Innenraumfläche eines Fahrzeugs ist ferner in der WO 2021/013730 A1 vorgeschlagen.

Ausgehend hiervon liegt der vorgeschlagenen Lösung die Aufgabe zugrunde, eine verbesserte Möglichkeit zur Fixierung eines Objekts an einer fahrzeugseitigen Fixierungsfläche bereitzustellen.

Diese Aufgabe ist mit einer Fixierungsvorrichtung des Anspruchs 1 gelöst.

Die vorgeschlagene Lösung sieht eine Fixierungsvorrichtung für eine Fixierung eines Objekts an einer Fixierungsfläche in einem Fahrzeug vor, die wenigstens das Folgende umfasst:
- mindestens ein Fixierungselement, das zur Fixierung des Objekts mit einem Fixierungsabschnitt ausgebildet ist, der für einen Eingriff in eine Fixierungsöffnung vorgesehen ist, wobei der Fixierungsabschnitt entlang einer Einführrichtung in die Fixierungsöffnung einführbar ist, und
- eine Verriegelungseinrichtung, die eingerichtet ist, in Wechselwirkung mit dem in die Fixierungsöffnung eingeführten Fixierungsabschnitt das Fixierungselement an der Fixierungsöffnung zu verriegeln.

Die Verriegelungseinrichtung umfasst hierfür wenigstens ein quer zur Einführrichtung verschiebliches Verriegelungselement, das in eine Verriegelungsposition verstellbar ist, in der das Verriegelungselement den Fixierungsabschnitt gegen ein Entfernen aus der Fixierungsöffnung sperrt, um das Fixierungselement an der Fixierungsöffnung zu verriegeln. Ferner umfasst die Verriegelungseinrichtung wenigstens einen Verbinder mit mindestens einem Kontaktierungselement, wobei der Verbinder in eine Kontaktierungsposition verstellbar ist, um durch das mindestens eine Kontaktierungselement einen Kontaktabschnitt des in der Fixierungsöffnung eingeführten Fixierungselements elektrisch zu kontaktieren. Das Verriegelungselement und der Verbinder der Verriegelungseinrichtung sind vorliegend relativ zueinander verstellbar. Die Verriegelungseinrichtung umfasst ferner eine Verstellmechanik, über die eine an der Verstellmechanik angreifende Antriebskraft sowohl in eine erste Verstellkraft zum Verschieben des Verriegelungselements in die Verriegelungsposition als auch in eine zweite Verstellkraft zum Verstellen des Verbinders relativ zu dem Verriegelungselement in die Kontaktierungsposition umsetzbar ist.

Die vorgeschlagene Lösung sieht somit zwei separat verstellbare Elemente (Fixierungselement und Verriegelungselement) und damit auch zwei separate Verstellbewegungen vor, um eine Fixierung eines Objekts an einer Fixierungsfläche sicherzustellen. Dementsprechend können die beiden unterschiedlichen Verstellbewegungen, des Fixierungselements mit seinem Fixierungsabschnitt einerseits und des Verriegelungselements andererseits, aufeinander abgestimmt werden, sind jedoch grundsätzlich unabhängig voneinander (manuell oder fremdkraftbetätigt) steuerbar. Das Verriegelungselement ist hierbei nicht an dem Fixierungselement selbst verstellbar gelagert, sondern kann mit dem Fixierungsabschnitt des Fixierungselements erst in Eingriff treten, wenn der Fixierungsabschnitt bestimmungsgemäß in die Fixierungsöffnung eingeführt wurde. Es ist hierbei grundsätzlich unerheblich, ob das Fixierungselement objektseitig oder fixierungsflächenseitig vorgesehen ist und ob umgekehrt das mindestens eine Verriegelungselement fixierungsflächenseitig oder objekteseitig vorgesehen ist.

Darüber hinaus geht die vorgeschlagene Lösung von dem Grundgedanken aus, mithilfe der Verriegelungseinrichtung eine elektrische Verbindung zwischen dem Fixierungselement und einem verriegelungseinrichtungsseitigen Verbinder zu ermöglichen. Wird folglich das Objekt bestimmungsgemäß über eine vorgeschlagene Fixierungsvorrichtung an einer Fixierungsfläche fixiert, kann damit auch automatisch ein Anschluss des Objekts an eine fahrzeugseitige Elektronik und/oder Stromversorgung einhergehen, ohne dass z.B. ein zusätzliches nutzerseitiges Anschließen eines Kabels notwendig wäre. Um in diesem Zusammenhang ein Anschließen über den Verbinder weiter zu vereinfachen und gegebenenfalls sicherzustellen, dass das Fixierungselement bereits in einer bestimmungsgemäßen Relativlage zu dem Verbinder vorgelegt, bevor der Verbinder in eine Kontaktierungsposition verstellt wird, ist die Verstellung des Verbinders nicht nur in die Verriegelungseinrichtung integriert. Vielmehr ist auch vorgesehen, dass eine gemeinsame Verstellmechanik sowohl die Verstellung des Verriegelungselements als auch die Verstellung des Verbinders steuert. Hierdurch kann beispielsweise auch erreicht werden, dass eine Antriebskraft lediglich auf ein einzelnes Antriebselement der Verstellmechanik aufgebracht werden muss, wobei über die Verstellmechanik die an dem Antriebselement anliegende Antriebskraft in Verstellbewegungen sowohl des Verriegelungselements als auch des Verbinders umgesetzt wird.

Über die Verstellmechanik wird folglich eine manuell oder motorisch erzeugte Antriebskraft sowohl in eine Verstellbewegung des Verriegelungselements als auch in eine Verstellbewegung des Verbinders (relativ zu dem Verriegelungselement) umgesetzt, sodass am Ende eines über die Verstellmechanik realisierten Verriegelungsvorgangs das Fixierungselement über das Verriegelungselement an der Fixierungsöffnung verriegelt ist und zusätzlich ein Kontaktabschnitt des verriegelten Fixierungselements mit dem mindestens einen Kontaktierungselement des Verbinders elektrisch leitend verbunden ist. Hierbei können das Verriegelungselement und der Verbinder mithilfe der Verstellmechanik aufeinanderfolgend oder gleichzeitig relativ zueinander verstellbar sein, um die jeweilig notwendige Verstellbewegung in die Verriegelungsposition einerseits und die Kontaktierungsposition andererseits auszuführen. Die jeweiligen Verstellbewegungen können somit insbesondere zwar untereinander gekoppelt, aber in Abhängigkeit von der Ausführung der Verstellmechanik variabel vorgebbar sein.

Beispielsweise ist der Verbinder als Steckverbinder ausgeführt. Dementsprechend kann das mindestens eine an dem Verbinder vorgesehene Kontaktierungselement Teil eines Steckers oder einer Buchse sein, der oder die mit einem entsprechenden Gegenstück an dem Fixierungsabschnitt des Fixierungselements verbindbar ist.

In einer Ausführungsvariante sind über die Verstellmechanik unter Wirkung der Antriebskraft das Verriegelungselement und der Verbinder zu zueinander gegenläufigen Verstellbewegungen antreibbar. Dies schließt beispielsweise ein, dass über die Verstellmechanik unter Wirkung der Antriebskraft einerseits das Verriegelungselement aus einer Freigabeposition in die Verriegelungsposition verstellbar ist und andererseits der Verbinder hierzu gegenläufig
a) aus einer Ausgangsposition in eine Zwischenposition verstellbar ist, aus der der Verbinder nachfolgend in die Kontaktierungsposition verstellbar ist, oder
b) aus einer Ausgangsposition in die Kontaktierungsposition verstellbar ist.
Bei einer derartigen Ausführungsvariante sind folglich das Verriegelungselement und der Verbinder beispielsweise unter Wirkung der Antriebskraft in zueinander entgegengesetzte Verstellrichtungen verstellbar. Eine Freigabeposition des Verriegelungselements zeichnet sich dabei grundsätzlich dadurch aus, dass der Fixierungsabschnitt des Fixierungselements in die Fixierungsöffnung einführbar und aus der Fixierungsöffnung entfernbar ist. Die Freigabeposition schließt ferner auch ein, dass der Fixierungsabschnitt in einer Einführöffnung an dem Verriegelungselement einführbar und aus dieser Einführöffnung wieder entfernbar ist. Die Freigabeposition unterscheidet sich somit gerade von der Verriegelungsposition des Verriegelungselements, in der das Fixierungselement verriegelt und gegen ein Entfernen aus der Fixierungsöffnung gesperrt ist.

Wird der Verbinder entsprechend der vorstehenden Variante a) zunächst gegenläufig zu dem Verriegelungselement aus einer Ausgangsposition in eine Zwischenposition verstellt, erfolgt erst im Anschluss ausgehend von dieser Zwischenposition eine Annäherung des Verbinders an den Kontaktabschnitt des Fixierungselements, um den Verbinder und das Fixierungselement elektrisch leitend miteinander zu verbinden. Eine Verstellbewegung des Verbinders in seine Zwischenposition kann in einer Weiterbildung auch mit der Verstellung des Verriegelungselements in die Verriegelungsposition überlagert werden.

Bei der Variante b) ist demgegenüber eine Verstellung des Verbinders entlang einer einzigen Verstellrichtung aus der Ausgangsposition in die Kontaktierungsposition vorgesehen. Aus der Ausgangsposition wird hier folglich der Verbinder entlang dieser Verstellrichtung dem Kontaktabschnitt des Fixierungselements angenähert, bis die Kontaktierungsposition erreicht ist. Demgegenüber kann bei der Variante a) eine wechselnde Verstellung des Verbinders realisiert sein, also zunächst entlang einer ersten Verstellrichtung von der Ausgangsposition in die Zwischenposition und anschließend entlang einer hierzu verschiedenen, gegebenenfalls entgegengesetzten Verstellrichtung von der Zwischenposition in die Kontaktierungsposition.

Wie bereits vorstehend erwähnt, kann in einer Ausführungsvariante das Verriegelungselement unter Wirkung der Antriebskraft mithilfe der Verstellmechanik entlang einer Längsachse in eine erste Verstellrichtung verschieblich sein, während - zeitgleich oder nachfolgend (jedoch unter Wirkung derselben weiterhin aufrechterhalten Antriebskraft) - der Verbinder zu einer hierzu gegenläufigen Verstellbewegung entlang der Längsachse in eine zweite, zu der ersten Verstellrichtung entgegengesetzte Verstellrichtung verschieblich ist.

Grundsätzlich kann der Verbinder an dem Verriegelungselement verstellbar, insbesondere verschieblich gelagert sein. Hierdurch wird eine kompakte, bauraumsparende Ausführung der Verriegelungseinrichtung unterstützt.

Insbesondere kann vorgesehen sein, dass das Verriegelungselement eine körperliche Führung für den verschieblich an dem Verriegelungselement gelagerten Verbinder aufweist. In einer hierauf basierenden Weiterbildung kann das Verriegelungselement auch zusätzlich einen Führungskörper mit einer dem Kontaktabschnitt des verriegelten Fixierungselements gegenüberliegenden Öffnung aufweisen, aus der dann das wenigstens eine Kontaktierungselement des Verbinders ausfahrbar und in den fixierungselementseitigen Kontaktabschnitt einfahrbar ist. Ein entsprechender Führungskörper kann beispielsweise nach Art einer Hülse aufgebaut sein, innerhalb der der Verbinder verschieblich gehalten ist.

Für die Führung des Verriegelungselements kann wiederum ein Führungselement vorgesehen sein. An einem solchen Führungselement ist das Verriegelungselement beispielsweise verschieblich gelagert und gegebenenfalls auch körperlich geführt. So kann das Verriegelungselement insbesondere entlang mindestens einer quer zu der Einführrichtung des Fixierungselements verlaufenden Führungsschiene als Führungselement verschieblich gelagert sein. Insbesondere kann das Verriegelungselement einen verschieblich gelagerten Verriegelungsschlitten umfassen, der an wenigstens einer Führungsschiene verschieblich gelagert ist.

In einer Ausführungsvariante weist die Verstellmechanik wenigstens ein schwenkbar gelagertes Hebelelement zur Übertragung der ersten und/oder zweiten Verstellkraft auf. Über ein schwenkbar gelagertes Hebelelement wird somit die jeweilige zum Verstellen des Verriegelungselements oder des Verbinders notwendige Verstellkraft übertragen.

Alternativ oder ergänzend umfasst die Verstellmechanik mindestens eine verstellbare Komponente, mit der ein Antriebselement der Verstellmechanik zur Erzeugung der ersten und/oder zweiten Verstellkraft gekoppelt ist. Bei der mindestens einen weiteren Komponente kann es sich zum Beispiel um ein Teil einer Übertragungsbaugruppe handeln, die Teil der Verstellmechanik ist und über die die Antriebskraft in die beiden notwendigen Verstellkräfte aufgeteilt und einerseits an das zu verstellende Verriegelungselement und andererseits an den zu verstellenden Verbinder übertragen wird. Die mindestens eine weitere Komponente kann beispielsweise mit dem Antriebselement gelenkig verbunden sein. Eine an dem Antriebselement angelenkte Komponente ermöglicht beispielsweise die Umsetzung einer Drehbewegung des Antriebselements in eine translatorische Verstellbewegung des Verriegelungselements und/oder des Verbinders.

So ist das Antriebselement beispielsweise um eine Antriebsachse drehbar gelagert. Grundsätzlich können die Antriebsachse des Antriebselements und die Schwenkachse eines an dem Antriebselement angelenkten Hebelelements parallel zueinander verlaufen.

Eine Schwenkachse eines Hebelelements kann aber zu der Antriebsachse des Antriebselements versetzt sein.

Für eine elektronisch steuerbare Verriegelung umfasst die Verriegelungseinrichtung in einer Ausführungsvariante mindestens einen Antriebsmotor. Über diesen Antriebsmotor ist ein Antriebselement der Verstellmechanik fremdkraftbetätigt verstellbar, z.B. in Reaktion auf ein Steuersignal, das eine Fixierung des Objekts an der Fixierungsfläche auslöst.

In einem Ausführungsbeispiel weist das Antriebselement der Verstellmechanik eine Kulisse auf, an der ein mit dem Verriegelungselement verbundenes Koppelelement verschieblich geführt ist. Das Verriegelungselement wirkt hier folglich über wenigstens eine Kulissenführung mit dem Antriebselement zusammen, um die Verstellbewegung des Verriegelungselements zu steuern. Die Kulisse verläuft hierbei beispielsweise an dem Antriebselement um eine Antriebsachse des Antriebselements.

In diesem Zusammenhang ist beispielsweise in einer Ausführungsvariante vorgesehen, dass die Kulisse an dem Antriebselement eine Führungsbahn für das mit dem Verriegelungselement verbundene Koppelelement definiert. Indem eine solche Führungsbahn mindestens zwei Bereiche aufweist, die zu der Antriebsachse des Antriebselements unterschiedlich beabstandet sind, kann eine durch eine Drehung des Antriebselements bewirkte Verstellkraft auf das Koppelelement in Abhängigkeit von einem Drehwinkel des Antriebselements variieren. So ist über eine derart ausgestaltete Kulissenführung durch die Drehung des Antriebselements eine nichtlinear verlaufende Verstellkraft auf das Verriegelungselement erzeugbar. Dies kann insbesondere von Vorteil sein, um das Verriegelungselement und den Verbinder über das drehende Antriebselement zu unterschiedlichen Zeitpunkten und/oder mit unterschiedlichen Verstellgeschwindigkeiten anzutreiben.

Beispielsweise folgt ein erster Bereich der Führungsbahn hierfür einer ersten Kreisbahn mit einem ersten Radius um die Antriebsachse, während ein zweiter Bereich der Führungsbahn einer zweiten Kreisbahn mit einem zweiten, zu dem ersten Radius verschiedenen Radius um die Antriebsachse folgt.

Alternativ oder ergänzend kann ein an dem Verbinder schwenkbar gelagertes Hebelelement vorgesehen sein, das zumindest teilweise in einer schwenkbar an dem Antriebselement gelagerten Führungshülse verschieblich aufgenommen ist. Unter Drehung des Antriebselements und damit in Abhängigkeit von der Drehbewegung des Antriebselements um seine Antriebsachse kann hierbei das Hebelelement teleskopartig aus der Führungshülse ausfahrbar und umgekehrt auch einfahrbar sein, um die zweite Verstellkraft auf den Verbinder zu übertragen.

In einer anderen Ausführungsvariante weist die Verstellmechanik alternativ oder ergänzend ein drehbar gelagertes Übertragungselement zur Übertragung der ersten und/oder zweiten Verstellkraft auf. Insbesondere kann somit ein drehbar gelagertes Übertragungselement zur Übertragung der zweiten Verstellkraft vorgesehen sein, um den Verbinder relativ zu dem Verriegelungselement in seine Kontaktierungsposition zu verstellen.

Bei dem Übertragungselement kann es sich insbesondere um eine weitere Komponente der Fixierungsvorrichtung handeln, mit der ein Antriebselement verbunden, insbesondere drehfest verbunden ist. Derart wird durch Antreiben des Antriebselements, beispielsweise über einen Antriebsmotor, auch das Übertragungselement verstellt, um eine Verstellbewegung des Verbinders zu steuern.

Wie bereits vorstehend erläutert, kann das Antriebselements in einer Ausführungsvariante drehbar gelagert und insbesondere mit einer Kulissenführung ausgestaltet sein. In einer Weiterbildung mit einem drehfest mit dem Antriebselement verbundenen Übertragungselement, kann das Übertragungselement ebenfalls eine Kulisse aufweisen, die um die Antriebsachse verläuft. An einer übertragungselementseitigen Kulisse ist dann beispielsweise ein dem Verbinder zugeordnetes Verbindungselement verschieblich gelagert. Über das Verbindungselement kann dann bei einer Drehung des Übertragungselements die zweite Verstellkraft zum Verstellen des Verbinders aufgebracht werden. In einer hierauf basierenden Ausführungsvariante weist somit die Verstellmechanik beispielsweise eine Übertragungsbaugruppe mit zwei Kulissenführungen für die Verstellung des Verriegelungselements und des Verbinders auf. Die Verläufe der jeweiligen Kulissen an dem Antriebselement und dem Übertragungselement um die gemeinsame (Antriebs-) Drehachse können dabei derart ausgeführt und aufeinander abgestimmt, dass bei der Drehung beider Elemente um die gemeinsame Drehachse zueinander gegenläufige Verstellbewegungen des Verriegelungselements und des Verbinders verursacht werden.

Grundsätzlich kann es von Vorteil sein, wenn zur Übertragung der Antriebskraft von einem Antriebsmotor eine Getriebeeinrichtung Teil der Verriegelungseinrichtung ist. Beispielsweise ist die Getriebeeinrichtung als Schneckengetriebe ausgebildet.

In einer alternativen Ausführungsvariante ist das Antriebselement über eine Hebelanordnung mit mindestens zwei Übertragungshebeln (einer Übertragungsbaugruppe der Verstellmechanik) mit dem Verriegelungselement und dem Verbinder gekoppelt. Hierbei können die mindestens zwei Übertragungshebel jeweils über ein Gelenk mit dem Antriebselement verbunden sein. Die mindestens zwei Übertragungshebel der Hebelanordnung sind folglich an dem Antriebselement angelenkt und über das jeweilige Gelenk an dem Antriebselement schwenkbar gelagert. Derart können beispielsweise durch eine Drehbewegung des Antriebselements zwei translatorisch wirkende Verstellkräfte auf das Verriegelungselement einerseits und den Verbinder andererseits an den Übertragungshebeln erzeugt werden.

Um bei einer derartigen Ausführungsvariante das Verriegelungselement und den Verbinder bei Drehung des Antriebselements (entlang einer Drehrichtung) zum Beispiel zeitlich zueinander versetzt und/oder in unterschiedliche Verstellrichtungen antreiben zu können, sind in einer Ausführungsvariante ein erster, mit dem Verriegelungselement gelenkig verbundener Übertragungshebel und ein zweiter, mit dem Verbinder gelenkig verbundener Übertragungshebel an unterschiedlichen, radial zu der Antriebsachse des Antriebselements beabstandeten ersten und zweiten Bereichen des Antriebselements mit dem Antriebselement verbunden. Die Übertragungshebel sind ferner derart zu einander angeordnet und mit dem Antriebselement verbunden, dass (ausgehend von einer definierten Ruheposition) durch eine Drehbewegung des Antriebselements um seine Antriebsachse der ersten, mit dem ersten Übertragungshebel verbundene Bereich des Antriebselements von dem Fixierungselement weg und der zweiten, mit dem zweiten Übertragungshebel verbundene Bereich des Antriebselements auf das Fixierungselement zu verlagert wird. Derart sind durch eine Drehbewegung des Antriebselements in eine Drehrichtung um die Antriebsachse zwei zueinander gegenläufige Verstellbewegungen des Verriegelungselements einerseits und des Verbinders andererseits sowohl relativ zueinander als auch relativ zu dem Fixierungsabschnitt erzeugbar. Hierbei wird davon ausgegangen, dass die ersten und zweiten Bereiche des Antriebselements durch eine Drehbewegung des Antriebselements von dem Fixierungselement weg respektive auf das Fixierungselement zu verlagerbar sind, wenn das Antriebselement in einer Ruheposition vorliegt, die mit einer Freigabeposition des Verriegelungselements korrespondiert. Liegt folglich das Verriegelungselement in seiner Freigabeposition vor, in der der Fixierungsabschnitt des Fixierungselements in die Fixierungsöffnung einführbar ist oder aus der Fixierungsöffnung entfernbar ist, liegt das Antriebselement in der Ruheposition vor, aus der der durch Drehung des Antriebselements in eine von zwei zueinander entgegengesetzten Drehrichtungen um seine Antriebsachse die einander gegenläufigen Verstellbewegungen des Verriegelungselements und des Verbinders - mithilfe der Übertragungshebel - erzeugbar sind.

Unabhängig von der Ausführung der Verstellmechanik, zum Beispiel unabhängig von einer Ausführung mit wenigstens einer Kulissenführung und/oder wenigstens einer Hebelanordnung, kann vorgesehen sein, dass das Verriegelungselement in der Verriegelungsposition formschlüssig mit dem Fixierungsabschnitt verbunden ist, um das Fixierungselement an der Fixierungsfläche zu fixieren. Insbesondere kann wenigstens Abschnitt des Verriegelungselements, betrachtet entlang der Einführrichtung, von dem Fixierungsabschnitt hintergriffen sein, wenn das Verriegelungselement in seiner Verriegelungsposition vorliegt.

Eine vorgeschlagene Fixierungsvorrichtung kann insbesondere zur Fixierung eines Objekts an einer karosseriefesten Fixierungsfläche in einem Fahrzeug vorgesehen sein, wobei die Fixierungsvorrichtung an der Fixierungsfläche oder an dem Objekt selbst vorgesehen sein kann. Beispielsweise ist für eine symmetrische Kraftverteilung und crashsichere Verriegelung des Objekts eine Mehrzahl von Fixierungselementen vorgesehen. Beispielsweise sieht eine Ausführungsvariante vor, dass objektseitig vier Fixierungselemente angeordnet sind, um das Objekt an vier Fixierungsöffnungen in einer eingenommenen Fixierungsposition zu fixieren.

Das Fixierungselement selbst ist in einer Ausführungsvariante nicht verstellbar ausgeführt. Beispielsweise ist das Fixierungselement an dem Objekt unbeweglich und starr vorgesehen. Um das objektseitige Fixierungselement dementsprechend in eine Fixierungsöffnung einzuführen, wird z.B. das Objekt mit dem an einer Unterseite vorstehenden Fixierungselement an eine passende Position an der Fixierungsfläche gesteckt. Alternativ kann ein motorisch gesteuertes oder manuelles Absenken des Objekts in Richtung der Fixierungsfläche vorgesehen sein, um das Fixierungselement mit einer Fixierungsöffnung in Eingriff zu bringen. Beispielsweise ist hierbei das Objekt eingerichtet und vorgesehen, bezüglich der Fixierungsfläche zwei unterschiedliche Stellungen einnehmen zu können. So kann das Objekt beispielsweise in einer ersten Stellung, in der das Fixierungselement zu der Fixierungsfläche beabstandet ist, an der Fixierungsfläche verstellbar, insbesondere motorisch gesteuert verstellbar sein. Ist eine gewünschte Fixierungsposition erreicht, ist das Objekt in eine zweite Stellung in Richtung der Fixierungsfläche absenkbar, wodurch dann das Fixierungselement (und gegebenenfalls noch weitere an dem Objekt vorgesehene Fixierungselemente) in eine entsprechende - dem Fixierungselement dann gegenüberliegende - Fixierungsöffnung an der Fixierungsfläche eingesteckt wird.

Eine Ausführungsvariante sieht vor, dass das mindestens eine Objekt als Innenraumobjekt ausgebildet ist und mindestens eine akkubetriebene motorische Antriebseinrichtung für ein nicht mechanisch geführtes Verfahren des Innenraumobjekts auf einer als Fixierungsfläche dienenden Innenraumfläche des Fahrzeugs umfasst. Das mindestens eine Fixierungselement ist dann für die Fixierung des mindestens einen Innenraumobjekts in einer Fixierungsposition an der Innenraumfläche vorgesehen, wobei das Erreichen dieser Fixierungsposition durch eine elektronische Detektionseinrichtung des Fahrzeugs detektierbar sein kann.

Über die mindestens eine akkubetriebene motorische Antriebseinrichtung ist das mindestens eine Innenraumobjekt nicht spurgeführt an der Innenraumfläche verfahrbar. Es mithin keine Führung oder Vorgabe eines Verfahrwegs für das Innenraumobjekt durch eine Schiene, ein Gleis oder eine Kulisse vorgesehen. Vielmehr ist das Innenraumobjekt frei an der Innenraumfläche verfahrbar. Alternativ kann das zu fixierende Objekt, insbesondere das Innenraumobjekt, aber auch manuell zu einer gewünschten Fixierungsposition verlagerbar sein.

Die Fixierungspositionen, an denen das Innenraumobjekt an der Innenraumfläche mithilfe des mindestens einen Fixierungselements fixierbar ist, können an der Innenraumfläche vorgegeben sein. Beispielsweise ist eine Vielzahl von möglichen Fixierungspositionen an der Innenraumfläche vordefiniert. Über die mindestens eine Detektionseinrichtung kann hierbei elektronisch detektierbar sein, wenn das Innenraumobjekt eine der vorgegebenen Fixierungspositionen erreicht hat, um dann eine Verstellung des mindestens einen Fixierungselements in seine Fixierungsstellung auszulösen und hierüber das Innenraumobjekt an der erreichten Fixierungsposition zu fixieren.

In einer Ausführungsvariante weist die motorische Antriebseinrichtung mindestens einen Rollkörper oder eine Kette für den Kontakt mit der Innenraumfläche und das Verfahren des Innenraumobjekts an der Innenraumfläche auf. Unter einem Rollkörper wird hierbei insbesondere eine Rolle, ein Rad oder ein Reifen verstanden. Über eine entsprechende Antriebseinrichtung mit mindestens einem Rollkörper oder einer Kette kann das Innenraumobjekt akkubetrieben an der Innenraumfläche entlang verstellt werden, gegebenenfalls ferngesteuert und/oder mithilfe der elektronischen Detektionseinrichtung.

In einer Ausführungsvariante weist die mindestens eine motorische Antriebseinrichtung einen omnidirektionalen Antrieb auf. Ein solcher omnidirektionaler Antrieb gestattet die Verstellung des Innenraumobjekts entlang beliebiger Richtungen in einer Raumebene an der Innenraumfläche. Zu diesem Zweck weist ein omnidirektionaler Antrieb beispielsweise wenigstens ein Allseitenrad auf.

Über das mindestens eine an einer Fixierungsposition in seine Fixierungsstellung verstellte Fixierungselement kann das Innenraumobjekt an einer Bodenverankerung der Innenraumfläche fixiert sein. Mithilfe des mindestens einen in seiner Fixierungsstellung vorliegenden Fixierungselements ist somit das Innenraumobjekt dann fahrzeugseitig verankert und crashsicher verriegelt. Dies schließt insbesondere ein, dass ein Fixierungselement oder mehrere Fixierungselemente ausgebildet und eingerichtet sind, das Innenraumobjekt an einer Fixierungsposition crashsicher zu verankern und damit das Innenraumobjekt gegen eine Verlagerung an der Innenraumfläche auch unter im Crash-Fall auftretenden hohen Beschleunigungskräften zu sichern.

Grundsätzlich kann das Fixierungselement an dem Innenraumobjekt oder an der Innenraumfläche verstellbar gelagert sein. Beispielsweise ist in einer Ausführungsvariante vorgesehen, dass das mindestens eine Fixierungselement an dem Innenraumobjekt verlagerbar vorgesehen ist, wobei das Fixierungselement in seine Fixierungsstellung verstellt wird, wenn das Innenraumobjekt eine vorgegebene Fixierungsposition erreicht hat. Alternativ oder ergänzend kann mindestens ein Fixierungselement an der Innenraumfläche angeordnet sein, das in seiner Fixierungsstellung das in einer bestimmungsgemäß eingenommenen Fixierungsposition vorliegende Innenraumobjekt fixiert. Insbesondere kann eine Fixierung des Innenraumobjekts über eine Kombination von an der Innenraumfläche und an dem Innenraumobjekt verstellbar gelagerten Fixierungselementen vorgesehen sein.

An der Innenraumfläche kann eine Vielzahl von möglichen Fixierungspositionen vorgegeben sein. Derart sind in dem Fahrzeuginnenraum mehrere unterschiedliche Fixierungspositionen für ein Innenraumobjekt oder für mehrere Innenraumobjekte vordefiniert, um eine endliche Anzahl von Stellen an der Innenraumfläche vorzugeben, an denen ein Innenraumobjekt bestimmungsgemäß (crashsicher) fixiert werden kann. Hiervon unabhängig ist über die akkubetriebene motorische Antriebseinrichtung ein Verstellweg für das Erreichen einer Fixierungsposition nicht vorgegeben und kann flexibel gewählt werden, insbesondere in Abhängigkeit von der Anordnung und/oder gewünschten Position eines oder mehrerer anderer Innenraumobjekte sowie in Abhängigkeit von etwaigen Hindernissen an der Innenraumfläche.

Die elektronische Detektionseinrichtung, über die beispielsweise auch während eines Verfahrens des Innenraumobjekts an der Innenraumfläche entlang dessen Position detektierbar ist, umfasst in einer Ausführungsvariante mindestens eine an dem Innenraumobjekt vorgesehene Komponente. Bei dieser Komponente kann es sich um eine passive oder aktive Komponente handeln, d.h., um eine (passive) Komponente, die durch ein Sensorelement der Detektionseinrichtung erfassbar ist, oder um eine (aktive) Komponente, die aktiv Signale an einen oder mehrere Empfänger der elektronischen Detektionseinrichtung sendet und/oder sensorisch mindestens eine für die Umgebung des Innenraumobjekts repräsentative Messgröße erfasst, über die wenigstens das Erreichen einer vorgegebenen Fixierungsposition an der Innenraumfläche des Fahrzeuginnenraums feststellbar ist.

Die elektronische Detektionseinrichtung kann grundsätzlich eingerichtet sein, die Position des Innenraumobjekts während eines Verfahrens an der Innenraumfläche
- optisch (zum Beispiel mittels Infrarot) und/oder
- magnetisch und/oder
- schallbasiert, insbesondere ultraschallbasiert und/oder
- radiowellenbasiert, insbesondere auf Basis wenigstens eines UWB-Signals ("UWB": "ultra-wideband") und/oder
- laserstrahlbasiert, insbesondere auf Basis eines Lidar-Verfahrens ("Lidar": "light detection and ranging")
zu detektieren.

Es kann auch eine Kombination unterschiedlicher Sensorelemente vorgesehen sein. Eine solche Kombination kann insbesondere eine Kombination der vorstehend genannten Messprinzipien (optisch, magnetisch, schallbasiert, etc.) beinhalten, auf deren Basis die elektronische Detektionseinrichtung eine Position des Innenraumobjekts während des Verfahrens an der Innenraumfläche detektieren kann.

In einer Ausführungsvariante ist vorgesehen, dass in der Fixierungsposition und bei in die Fixierungsstellung verstelltem Fixierungselement eine elektrische Verbindung zwischen einer fahrzeugseitigen Energiequelle und dem Innenraumobjekt bereitgestellt ist. Insbesondere kann eine elektrische Verbindung, wie vorstehend erläutert, über das Fixierungselement bereitgestellt sein. Hierfür ist beispielsweise ein objektseitiges Fixierungselement in seiner Fixierungsstellung mit einem fahrzeugseitigen Verbinder elektrisch leitend verbunden oder ein fahrzeugseitiges Fixierungselement ist in seiner Fixierungsstellung mit einem objektseitigen Verbinder elektrisch leitend verbunden. Eine entsprechende elektrische Verbindung dient beispielsweise dem Aufladen wenigstens eines Energiespeichers des Innenraumobjekts, insbesondere einem Akku des Innenraumobjekts, und/oder der Versorgung mindestens eines Verbrauchers an oder in dem Innenraumprojekt. Der mindestens eine Verbraucher kann beispielsweise ein Display oder einen zusätzlich vorgesehenen, elektrisch betreibbaren Antrieb des Innenraumobjekts umfassen, über den ein Verstellteil des Innenraumobjekts fremdkraftbetätigt verstellbar ist. Handelt es sich beispielsweise bei dem Innenraumobjekt um einen Fahrzeugsitz, kann ein zusätzlicher elektrisch betreibbar Antrieb für die Verstellung einer Kopfstütze, eines Sitzkissen und/oder einer Rückenlehne des Fahrzeugsitzes als Verstellteil vorgesehen sein. Alternativ oder ergänzend kann die elektrische Verbindung dem Anschluss an ein fahrzeugseitiges Bussystem dienen, z.B. um Signale eines fahrzeugseitigen Schutz- und/oder Rückhaltesystems, insbesondere eines Airbagsystems, an das Innenraumobjekt zu übertragen oder von dem Innenraumobjekt an ein solches System zu übertragen.

Alternativ oder ergänzend kann das Innenraumobjekt mindestens einen Anschluss für die Kopplung mit einer externen, fahrzeugunabhängigen Energiequelle umfassen. Ein solcher Anschluss umfasst beispielsweise einen Steckverbinder für die Kopplung mit einer elektrischen Energiequelle, sodass das Innenraumobjekt außerhalb des Fahrzeugs an eine Stromquelle angeschlossen und beispielsweise ein Energiespeicher des Innenraumobjekts aufgeladen werden kann.

Grundsätzlich kann eine vorgeschlagene Fixierungsvorrichtung auch für einen Fahrzeug-Fahrradständer oder einen Fahrzeug-Fahrradträger Verwendung finden. Der Fahrradständer oder Fahrradträger ist hierbei Teil einer Haltevorrichtung für mindestens ein Fahrrad, die als Objekt über die Fixierungsvorrichtung an einer Innenraumfläche des Fahrzeugs fixierbar ist.

In einer hierauf basierenden Ausführungsvariante, bei der die Fixierungsvorrichtung auch eine elektrische Verbindung zu einer fahrzeugseitigen Energiequelle und/oder einer fahrzeugseitigen Steuerelektronik bereitstellt, bietet dann eine über die Fixierungsvorrichtung an das Fahrzeug angebundene Haltevorrichtung die Möglichkeit ein hieran gehaltenes E-Bike aufzuladen. So wird dann über die Fixierungsvorrichtung eine elektrisch leitende Verbindung zu der Spannungsversorgung des fahrzeugseitigen Bordnetzes hergestellt, während die Haltevorrichtung wiederum eine Schnittstelle für die elektrische Verbindung mit einem elektronischen System des E-Bikes bereitstellt. So kann dann beispielsweise eine Ladefunktion in die Haltevorrichtung integriert werden. Eine derart integrierte Ladefunktion respektive ein hierüber in die Haltevorrichtung integriertes Ladegerät kann der beispielsweise auch zur Kopplung mit einem weiteren Fahrradträger vorgesehen sein, der beispielsweise über eine Anhängerkupplung des Fahrzeugs fixiert ist.

Von der vorgeschlagenen Lösung ist insbesondere ein Fahrzeug mit einem zu fixierenden Objekt, einer karosseriefesten Fixierungsfläche und mindestens einer Ausführungsvariante einer vorgeschlagenen Fixierungsvorrichtung zur Fixierung des Objekts an der Fixierungsfläche umfasst.

Die beigefügten Figuren veranschaulichen exemplarisch mögliche Ausführungsvarianten der vorgeschlagenen Lösung.

Hierbei zeigen:
- Figur 1: in geschnittener Draufsicht auf eine Innenraumfläche einen Fahrzeuginnenraum einer Ausführungsvariante eines vorgeschlagenen Fahrzeugs mit mehreren hierin frei verfahrbaren Innenraumobjekten in Form von Fahrzeugsitzen;
- Figuren 2A bis 2C: in Seitenansicht die Innenraumfläche der Figur 1 mit einem Fahrzeugsitz in zwei unterschiedlichen Fixierungspositionen und in verschiedenen Phasen bei einem Verfahren von einer ersten Fixierungsposition zu einer zweiten Fixierungsposition und einer anschließenden Drehung des Fahrzeugsitzes;
- Figur 3: in perspektivischer Ansicht ein Ausführungsbeispiel für ein Allseitenrad zur Verwendung in dem Fahrzeugsitz der Figuren 2A bis 2C;
- Figur 4: in Draufsicht eine weitere Ausführungsvariante eines Allseitenrads für die Verwendung in einem Fahrzeugsitz der Figuren 2A bis 2C
- Figur 5: schematisch und in Draufsicht die Innenraumfläche des Fahrzeugs der Figur 1 unter Veranschaulichung einer elektronischen Detektionseinrichtung, die mindestens eine Komponente an dem Innenraumobjekt in Form des Fahrzeugsitzes aufweist;
- Figur 6A: ausschnittsweise und in perspektivischer Ansicht eine Ausführungsvariante einer vorgeschlagenen Fixierungsvorrichtung mit einem als Verriegelungszunge ausgebildeten Fixierungselement vor dem Einführen in eine fahrzeugbodenseitige Einführöffnung;
- Figur 6B: in mit der Figur 6A übereinstimmender Ansicht die Fixierungsvorrichtung mit dem bestimmungsgemäß in die Einführöffnung eingeführten Fixierungselement;
- Figuren 7-10: verschiedene Ansichten der Fixierungsvorrichtung mit dem in die Einführöffnung maximal eingeführten Fixierungselement in einem (noch) unverriegelten Zustand;
- Figuren 11-13: in verschiedenen Ansichten die eine Verriegelungseinrichtung umfassende Fixierungsvorrichtung in einem Zustand, in der die Verriegelungseinrichtung zur Verriegelung des Fixierungselements betätigt wurde und das Fixierungselement bereits gegen eine Entfernen aus der Fixierungsöffnung gesperrt ist;
- Figuren 14-17: in verschiedenen Ansichten die Fixierungsvorrichtung mit der weiter verstellten Verriegelungseinrichtung, über die das Fixierungselement nunmehr nicht nur verriegelt, sondern zusätzlich auch über einen verriegelungseinrichtungsseitigen Verbinder elektrisch kontaktiert ist, wobei die Verstellung des Verbinders über eine mit einer Kulissenführung ausgestattete Verstellmechanik der Verriegelungseinrichtung gesteuert wird, über die auch die Verriegelung des Fixierungselements erfolgt;
- Figur 18A: in mit der Figur 6A übereinstimmender Ansicht eine weitere Ausführungsvariante einer vorgeschlagenen Fixierungsvorrichtung mit einer Verriegelungseinrichtung mit alternativ ausgestalteter Verstellmechanik für die Verstellung eines Verriegelungselements und eines Verbinders;
- Figur 18B: in mit der Figur 18A übereinstimmender Ansicht die Fixierungsvorrichtung der Figur 18A mit in die Fixierungsöffnung bestimmungsgemäß eingeführtem Fixierungselement;
- Figuren 19-23: in verschiedenen Ansichten die Fixierungsvorrichtung mit dem noch unverriegelten Fixierungselement;
- Figuren 24-26: die Fixierungsvorrichtung der Figuren 18A bis 23 mit gegenläufig zueinander verstellten Verriegelungselement und Verbinder, wodurch das Fixierungselement nicht nur formschlüssig gegen ein Entfernen aus der Fixierungsöffnung gesperrt, sondern auch elektrisch über den verriegelungseinrichtungsseitigen Verbinder kontaktiert ist;
- Figur 27: in perspektivischer Ansicht eine weitere Ausführungsvariante einer vorgeschlagenen Fixierungsvorrichtung, bei der ein als Verriegelungszunge ausgebildetes Fixierungselement noch nicht an die Verriegelungseinrichtung eingesteckt ist;
- Figur 27A: die Ausführungsvariante Figur 27 in geschnittener Ansicht;
- Figur 28: in mit der Figur 27 übereinstimmender Ansicht die Fixierungsvorrichtung mit an die Verriegelungseinrichtung eingesteckter Verriegelungszunge;
- Figur 28A: geschnittene Ansicht der Figur 28;
- Figur 29: in ebenfalls geschnittener und um 180° gedrehter Ansicht die Fixierungsvorrichtung der Figuren 27 bis 28A in verriegeltem Zustand und mit an die Verriegelungszunge angestecktem Verbinder;
- Figuren 30A bis 30C: perspektivische Ansichten der Fixierungsvorrichtung gemäß dem Zustand der Figuren 28 und 28A mit einem entfernten Gehäusedeckel und damit freigegebenem Blick auf eine Übertragungsbaugruppe der Verriegelungseinrichtung (Figur 30A), mit zusätzlich ausgesparter Darstellung eines für die Verstellung des Verbinders vorgesehenen Übertragungselement (Figur 30B) und mit zusätzlich ausgesparter Darstellung eines für die Verstellung des Verriegelungselements vorgesehenen Antriebselements (Figur 30C).

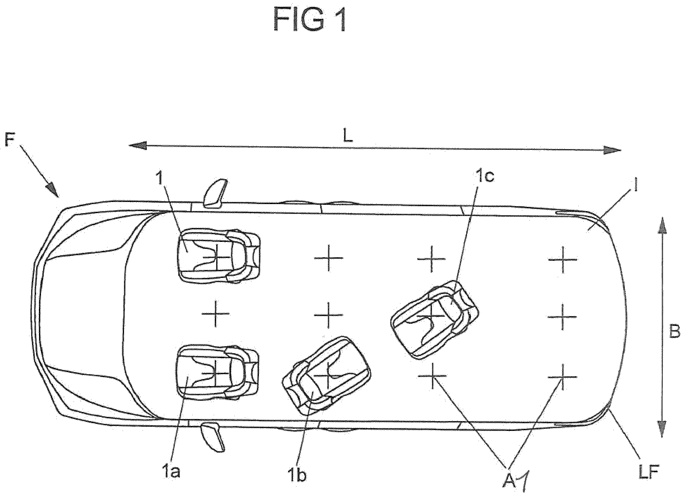

Die Figur 1 zeigt exemplarisch ein Fahrzeug F, das in seinem Inneren eine ebene Innenraumfläche I einer Länge L und einer Breite B definiert, die sich von einem Armaturenbrett des Fahrzeugs F bis zu einer heckseitigen Ladekante LF erstreckt. Die Länge L liegt beispielsweise im Bereich von 5 bis 7,5 m und die Breite B liegt im Bereich von 1,5 bis 2 m. An der Innenraumfläche I sind mehrere Ankerpunkte A1 vorgesehen, die als Fixierungspositionen für die Fixierung unterschiedlicher Innenraumobjekte dienen. Die Ankerpunkte A1 sind hierbei als Eckpunkte eines virtuellen Rasters an der Innenraumfläche I verteilt vorgesehen.

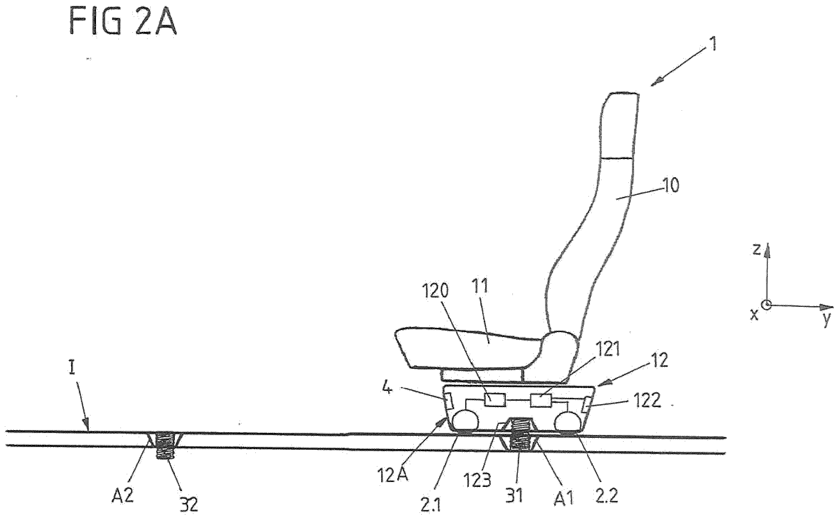

An den Ankerpunkten A1 sind vorliegend beispielsweise unterschiedliche Fahrzeugsitze 1, 1a bis 1c als Innenraumobjekte fixierbar. Die Fahrzeugsitze 1, 1a bis 1c sind hierbei als frei verstellbare Einheiten ausgeführt, die nicht mechanisch geführt, insbesondere nicht mechanisch spurgeführt, an der Innenraumfläche I verfahren werden können. Ist ein Fahrzeugsitz 1, 1a bis 1c bestimmungsgemäß an einem Ankerpunkt A1 angeordnet und mit einer Basis 12 des Sitzes 1, 1a bis 1c (vergleiche insbesondere Figuren 2A bis 2C) angeordnet, kann der jeweilige Fahrzeugsitz 1, 1a bis 1c an der Innenraumfläche I crashsicher fixiert werden. Beispielsweise kann ein Fahrzeugsitz 1, 1a bis 1c derart über eine hintere Ladekante LF (bei geöffneter Heckklappe des Fahrzeugs F) auf die Innenraumfläche I gesetzt werden und dann von einem Nutzer elektronisch gesteuert, an einen gewünschten Ankerpunkt A1 an der Innenraumfläche I verfahren und dort fixiert werden. Die Anordnung verschiedener Innenraumobjekte wie der Fahrzeugsitze 1, 1a bis 1c ist somit äußerst variabel und nahezu beliebig durch einen Nutzer gestaltbar.

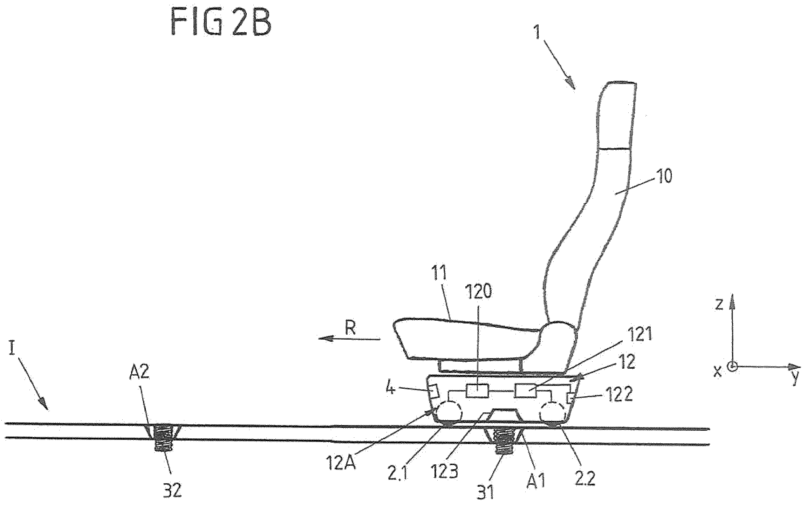

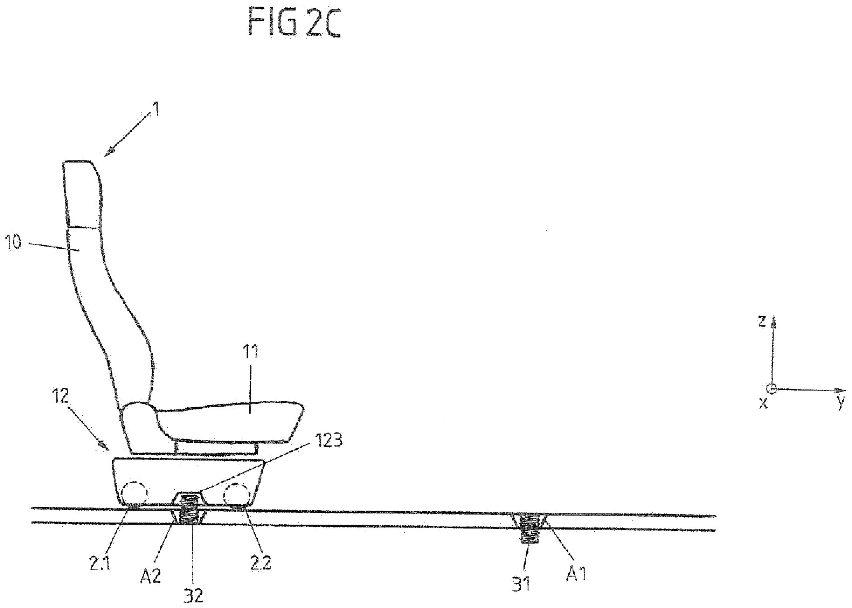

In den Seitenansichten der Figuren 2A ,2B und 2C ist ein Fahrzeugsitz 1 exemplarisch näher veranschaulicht. Der Fahrzeugsitz 1 weist eine Basis 12 mit einer akkubetriebenen motorischen Antriebseinrichtung 12A auf. Die über die motorische Antriebseinrichtung 12A verfahrbare Basis 12 trägt ein Sitzteil 11 und eine Rückenlehne 10 des Fahrzeugsitzes 1. Die Rückenlehne 10 kann hierbei in ihrer Neigung bezüglich des Sitzteils 11 verstellbar sein. Alternativ oder ergänzend kann die Sitztiefe über eine Verstellung des Sitzteils 11 an der Basis 12 einstellbar sein.

Die Basis 12 ist über ein Allseitenrad oder mehrere Allseitenräder 2.1, 2.2 an der Innenraumfläche I frei verfahrbar. Ein Drehmoment zum Verfahren des Fahrzeugsitzes wird hierbei über einen Antriebsmotor 120 aufgebracht, der innerhalb der Basis 12 untergebracht ist. Dieser Antriebsmotor 120 wird über einen innerhalb der Basis 12 untergebrachten Akku 121 als Energiespeicher mit Strom versorgt. Der Akku 121 ist hierbei über einen durch einen Steckverbinder 122 an der Basis 12 bereitgestellten Anschluss fahrzeugunabhängig aufladbar. Der Fahrzeugsitz 1 kann somit von dem Fahrzeug F getrennt an einer elektrischen Stromversorgung aufgeladen werden. Hierfür ist beispielsweise eine fahrzeugunabhängige Ladestation bereitgestellt.

Ist der Fahrzeugsitz 1 an einem von in den Figuren 2A, 2B und 2C dargestellten Ankerpunkten A1, A2 positioniert, kann der Fahrzeugsitz 1 über ein fahrzeugseitiges Fixierungselement 31, z.B. in Form eines Fixierbolzens oder einer Verriegelungszunge, fixiert werden. Hierfür greif das Fixierungselement 31 an dem Ankerpunkt A1 nach oben in einen Kopplungsabschnitt 123 der Basis 12 ein, der eine Fixierungsöffnung für Fixierungselemente 31, 32 definiert. Zusätzlich zu dem exemplarisch dargestellten Fixierungselement 31 können weitere Fixierelemente vorgesehen sein, um die Basis 12 und damit den Fahrzeugsitz 1 crashsicher an dem Ankerpunkt A1 der Innenraumfläche I zu fixieren.

Über das in die Basis 12 eingreifende und damit in einer Fixierungsstellung vorliegende Fixierungselement 31 kann vorliegend auch eine Verbindung zu einer fahrzeugseitigen Energiequelle, mithin einer fahrzeugseitigen Batterie, bereitgestellt sein. Über die elektrische Verbindung ist dann beispielsweise der Akku 121 (insbesondere bei fahrendem Fahrzeug) aufladbar.

Alternativ oder ergänzend kann über die Ankopplung an die elektrische Energieversorgung des Fahrzeugs F mindestens ein zusätzlicher elektromotorischer Antrieb des Fahrzeugsitzes 1 mit Strom versorgbar sein, um beispielsweise die Rückenlehne 10 oder das Sitzteil 11 fremdkraftbetätigt zu verstellen. So kann beispielsweise das Sitzteil 11 an der Basis 12 um eine parallel zu einer Raumrichtung z verlaufende Hochachse um mehr als 90°, insbesondere um bis zu 180° oder sogar um 360°fremdkraftbetätigt drehbar sein, zumindest wenn die Basis 12 bestimmungsgemäß an einem Ankerpunkt A1 (oder A2; vgl. Figur 2C) fixiert ist.

Auf einen nutzerseitigen Bedienwunsch hin kann der Fahrzeugsitz 1 von dem Ankerpunkt A1 zu einem anderen Ankerpunkt A2 an der Innenraumfläche I entlang verfahren werden. Hierfür wird zunächst das Fixierungselement 31 in eine Ausgangsstellung an der Innenraumfläche I eingefahren und hierüber die Basis 12 freigegeben. Der Fahrzeugsitz 1 kann dann motorisch mithilfe der Allseitenräder 2.1, 2.2 entlang einer Verfahrrichtung R von dem Ankerpunkt A1 zu dem Ankerpunkt A2 verfahren werden. Gesteuert wird dieses fremdkraftbetätigte Verfahren des Fahrzeugsitzes 1 über eine elektronische Detektionseinrichtung D, zu der vorliegend ein an der Basis 12 vorgesehenes Detektionselement 4 zählt. Beispielsweise handelt es sich hierbei um einen Tag 4, der im Zusammenspiel mit mindestens einem fahrzeugseitigen Sensorelement der Detektionseinrichtung D eine elektronische Detektion der Position des Sitzes 1 an der Innenraumfläche I ermöglicht.

Derart ist dann beispielsweise elektronisch detektierbar, wenn der Fahrzeugsitz 1 den (zweiten) Ankerpunkt A2 erreicht hat, und zwar derart, dass ein fahrzeugseitiger Fixierbolzen 32 an diesem (zweiten) Ankerpunkt A2 in den Kopplungsabschnitt 123 der Basis 12 eingreifen kann, um den Fahrzeugsitz 1 an dem Ankerpunkt A2 zu fixieren. Hiernach kann beispielsweise der Fahrzeugsitz 1 um die Hochachse um 180° gedreht werden.

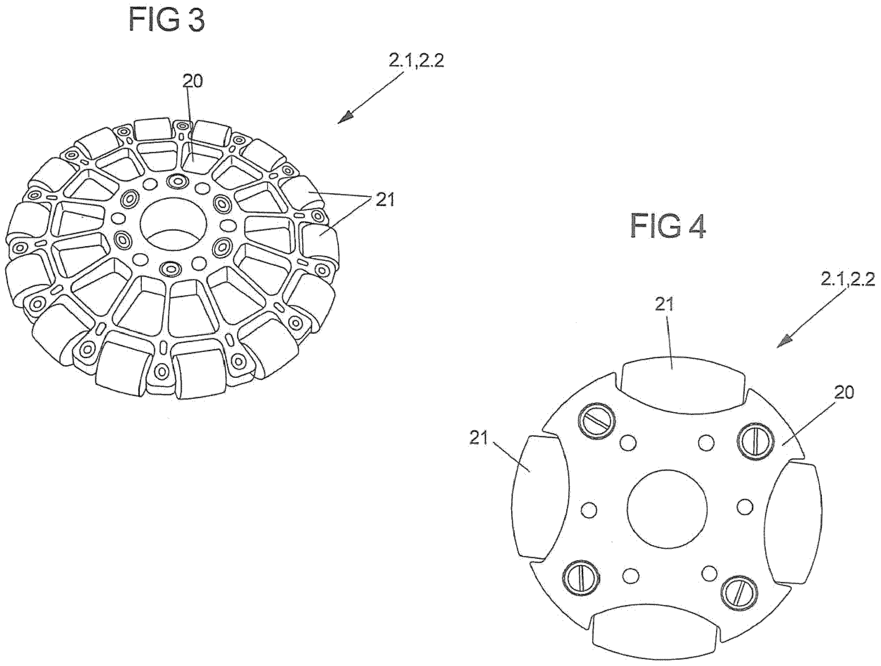

Die Figuren 3 und 4 veranschaulichen exemplarisch mögliche Ausführungsvarianten für ein Allseitenrad 2.1, 2.2 an der Basis 12 des Fahrzeugsitzes 1. Die Figur 3 zeigt hierbei beispielsweise in perspektivischer Ansicht ein Allseitenrad 2.1, 2.2 mit einem scheibenförmigen Rollenträger 20, an dem umfangsseitig eine Vielzahl von Rollen 21 drehbar gelagert ist. Bei der Ausführungsvariante eines Allseitenrades 2.1, 2.2 der Figur 4 sind an einem scheibenförmigen Rollenträger 20 lediglich vier Rollen 21 um jeweils 90 ° um einen Mittelpunkt des Rollenträgers 20 zueinander versetzt jeweils drehbar angeordnet. Über jeden der Rollenträger der Figuren 3 und 4 ist dabei eine Verstellung in jede Raumrichtung entlang einer Ebene möglich.

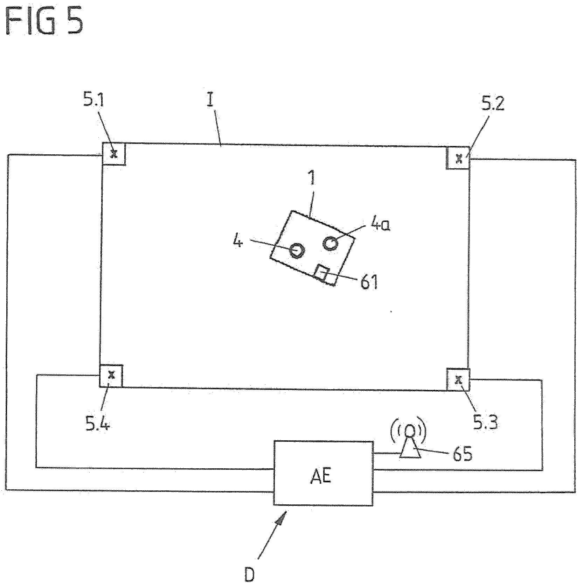

Die Figur 5 veranschaulicht in Draufsicht exemplarisch eine mögliche Gestaltung einer Detektionseinrichtung D, über die die Position eines Fahrzeugsitzes 1 während eines Verfahrens an der Innenraumfläche I detektierbar ist. Bei der dargestellten Ausführungsvariante sind vier Sensorelemente 5.1-5.4 an definierten Positionen des Fahrzeuginnenraums und gegebenenfalls an der Innenraumfläche I des Fahrzeugs F (z.B. an deren Eckpunkten) vorgesehen.

Der Fahrzeugsitz 1 weist des Weiteren einen Tag 4 und gegebenenfalls einen zusätzlichen Tag 4a auf. Die Tags 4, 4a können hierbei über die Sensorelemente 5.1-5.4 detektiert werden, beispielsweise indem die Tags 4, 4a aktiv Signale aussenden, die von den Sensorelementen 5.1-5.4 empfangen werden können oder indem die Sensorelemente 5.1-5.4 nach Art eines RFID-Labels ausgelesen werden können. Derart kann beispielsweise mittels der Detektionseinrichtung D eine Position des Fahrzeugsitzes 1 innerhalb eines von den Sensorelementen 5.1-5.4 aufgespannten bzw. überwachten räumlichen Detektionsfeldes an der Innenraumfläche I detektiert werden. Über eine mit den Sensorelementen 5.1-5.4 gekoppelte Auswerteelektronik AE der Detektionseinrichtung D ist dann eine Position des Fahrzeugsitzes 1 aus erzeugten Sensorsignalen an der Innenraumfläche I feststellbar, z.B. mittels Triangulation.

Um die Detektion einer Position des Fahrzeugsitzes 1 zu verbessern und Fehldetektionen zu vermeiden, sind beispielsweise unterschiedliche Messprinzipien miteinander kombiniert, sodass die Position des Fahrzeugsitzes 1 an der Innenraumfläche I über verschiedene Messprinzipien nutzende Sensorelemente 5.1-5.4 überwacht wird. So kann beispielsweise ein Lidar-System, ein funkbasiertes Tracking, basierend zum Beispiel auf elektromagnetischen Wellen, wie Radarwellen, UWB, Bluetooth, ein Suchdraht im Boden oder an der Decke, eine Detektion auf Basis von Infrarotsignalen und/oder Ultraschallsignalen vorgesehen sein.

Die Detektionseinrichtung D weist bei der Ausführungsvariante der Figur 5 zusätzlich noch eine Sendereinheit 65 auf, die anhand der von der Auswerteelektronik AE ermittelten Position des Fahrzeugsitzes 1 an der Innenraumfläche I Steuersignale an die motorische Antriebseinrichtung 12 des Fahrzeugsitzes 1 sendet. Der Fahrzeugsitz 1 weist hierbei, zum Beispiel ebenfalls an der Basis 12, eine Empfängereinheit 61 auf, die zum Empfang der Steuersignale der Sendeeinheit 65 eingerichtet ist. Die Empfängereinheit 61 ist mit dem Antriebsmotor 120 der Basis 12 gekoppelt, um den Fahrzeugsitz 1 entsprechend den Steuersignalen 65 und damit insbesondere in Abhängigkeit von der detektierten Position des Fahrzeugsitzes 1 an der Innenraumfläche I an einen gewünschten Ankerpunkt A1 oder A2 zu verfahren.

Das Verfahren des Fahrzeugsitzes 1 kann hierbei beispielsweise von einem Nutzer mithilfe einer Steuerungsapplikation, insbesondere einer auf einem Mobiltelefon installierten Steuerungsapplikation steuerbar sein. Alternativ oder ergänzend kann eine bestimmte Position eines Fahrzeugsitzes 1 an der Innenraumfläche I vorkonfiguriert sein, gegebenenfalls auch in Kombination mit vorgegebenen Positionen für weitere Innenraumobjekte, wie zum Beispiel eine Mittelarmkonsole oder einen Tisch. Derart kann ein Nutzer beispielsweise eine bestimmte Vorkonfiguration auswählen und über die Detektionseinrichtung D den Fahrzeugsitz 1 - und gegebenenfalls weitere Innenraumobjekte - automatisch in Position verfahren lassen. Eine entsprechende Steuerung für das Verfahren eine Fahrzeugsitzes 1 (oder weitere Innenraumobjekte) an der Innenraumfläche I kann alternativ oder ergänzend in das Fahrzeug F integriert sein. Dies schließt insbesondere die Einstellung und spätere Ausführung einer oder mehrerer Vorkonfigurationen an einer fahrzeugseitigen Bedieneinheit für die Anordnung eines oder mehrerer Innenraumobjekte ein.

In einem beispielhaften Verfahren zum Verfahren eines Fahrzeugsitzes 1 mithilfe der Detektionseinrichtung D wird diese beispielsweise zunächst angeschaltet. Hieran kann sich anschließen, dass sich die Sensorelemente 5.1-5.4 zunächst synchronisieren und auf Funktionsfähigkeit geprüft werden. Dann wird mittels eines der Sensorelemente 5.1 einer der Tags 4, 4a, zum Beispiel ein erster Tag 4, abgefragt. Dieser erste Tag 4 sendet ein Antwortsignal, das von allen Sensorelementen 5.1-5.4 empfangen wird. Über die Auswerteelektronik AE werden dann die Laufzeitunterschiede ausgewertet, die sich aus dem Anfragen des Tags 4 und dem in Reaktion hierauf an den einzelnen Sensorelementen 5.1-5.4 empfangenen (Antwort-) Signal des Tags 4 ergeben. Hieraus kann dann ein für die Position des Tags 4 und damit des Fahrzeugsitzes 1 repräsentativer Positionswert errechnet werden.

Über ein analoges Vorgehen für den weiteren Tag 4a ergibt sich ein weiterer Positionswert für den Fahrzeugsitz 1. Dieser weitere Positionswert kann zur (Plausibilitäts-) Prüfung des mithilfe des ersten Tags 4 ermittelten Positionswerts und/oder für eine Ermittlung einer Ausrichtung des Fahrzeugsitzes 1 bezüglich der Sensorelemente 5.1-5.4 an der Innenraumfläche I herangezogen werden. So kann durch die Position zweier Tags 4, 4a, die einer bestimmten, festen Relativlage zueinander an dem Fahrzeugsitz 1 angeordnet sind, nicht nur ermittelt werden, an welcher Stelle sich der Fahrzeugsitz 1 befindet, sondern auch wie der Fahrzeugsitz 1 respektive seine Basis 12 an der Innenraumfläche I orientiert ist. Auf Basis der ermittelten Position(en) des Fahrzeugsitzes 1 erfolgt dann das Verfahren des Fahrzeugsitzes 1, bis dieser eine gewünschte Fixierungsposition erreicht hat, an der der Fahrzeugsitz 1 fixiert und damit in seiner erreichten Fixierungsposition an einem Ankerpunkt A1 oder A2 gesichert werden kann.

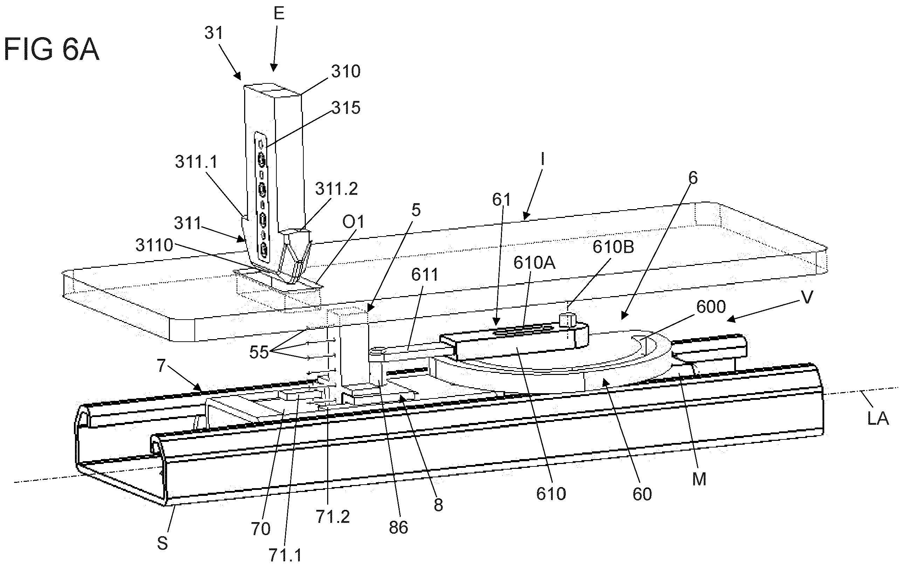

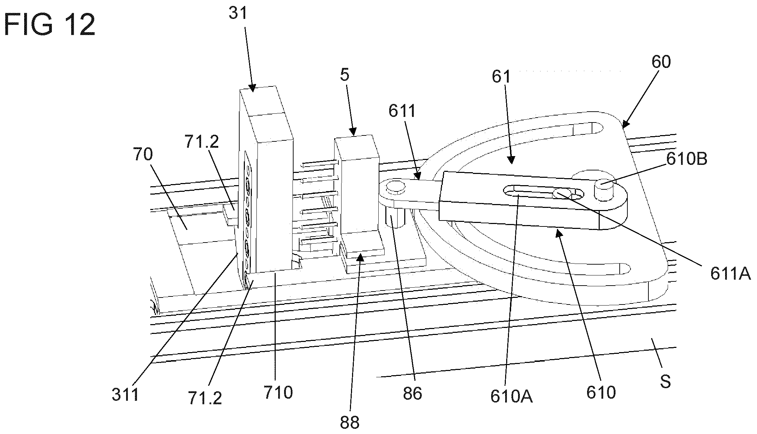

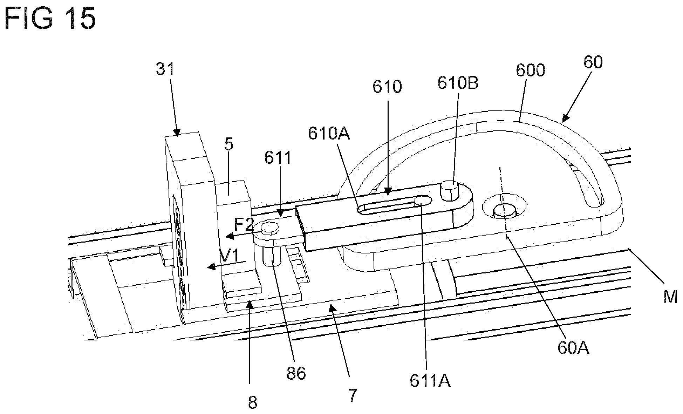

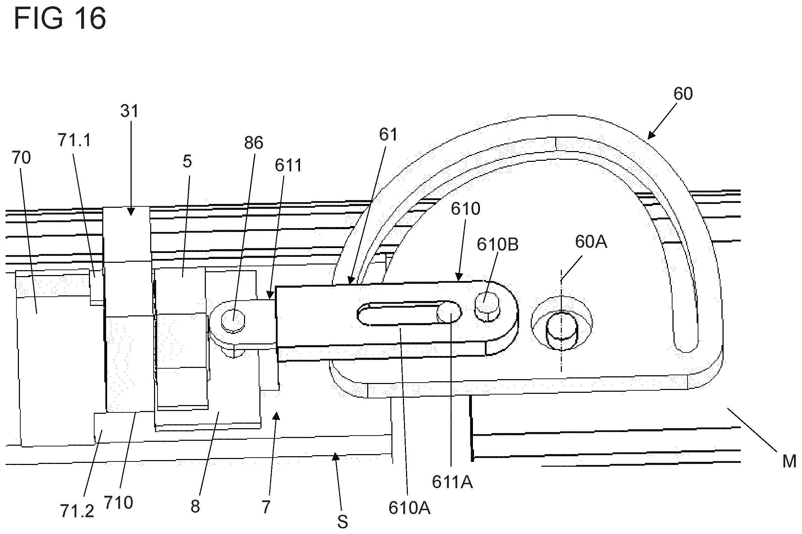

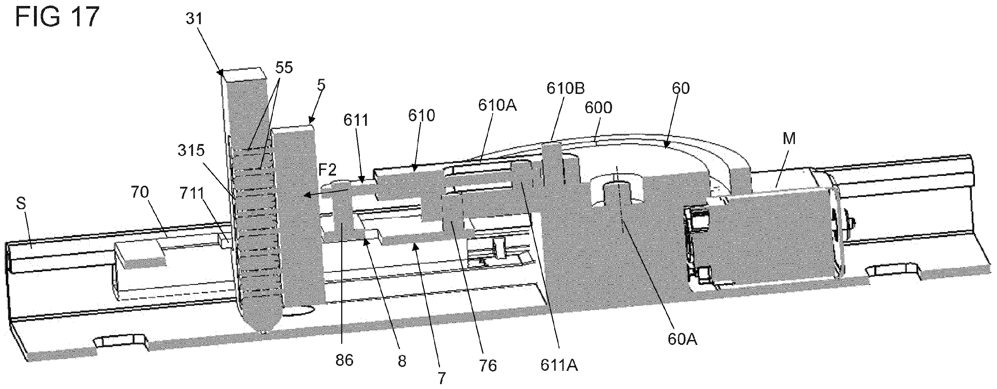

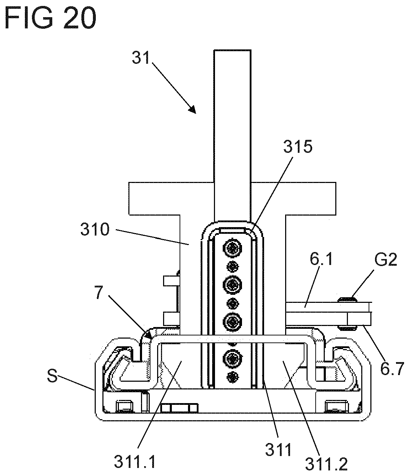

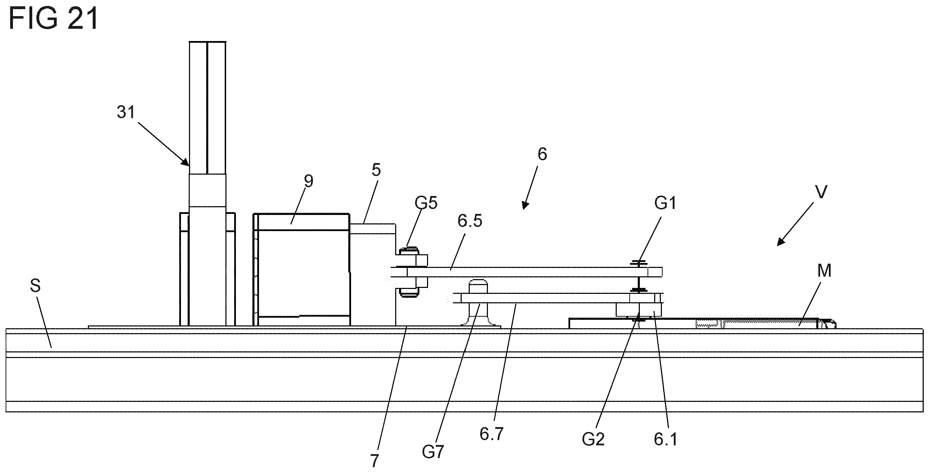

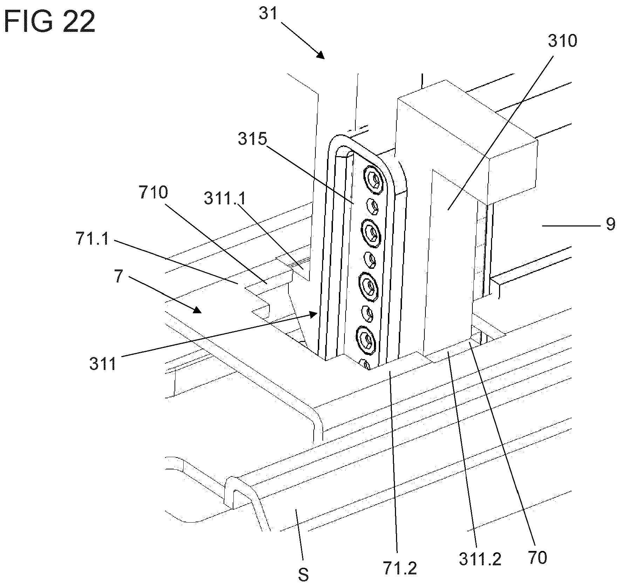

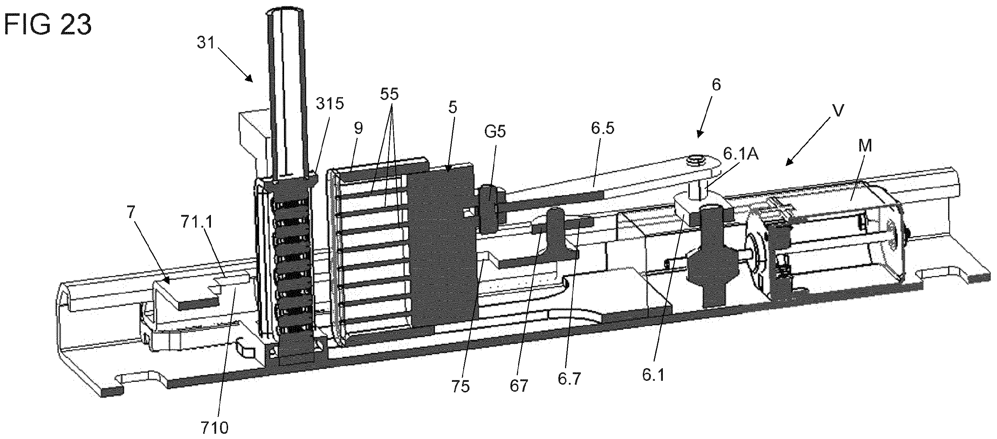

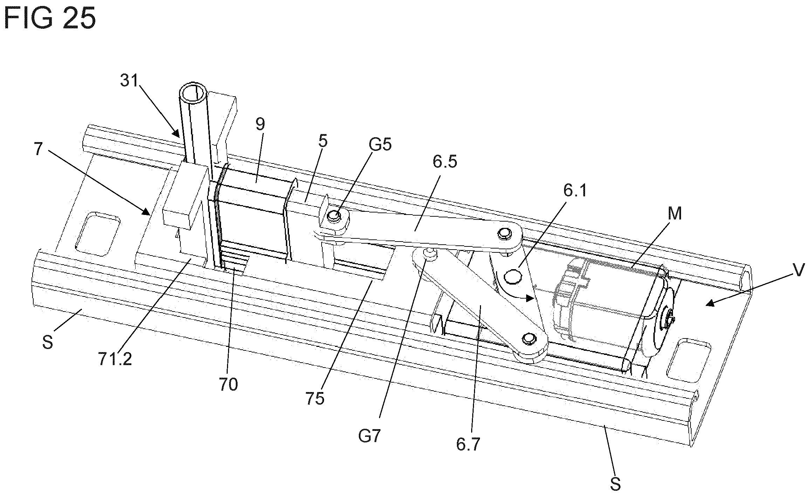

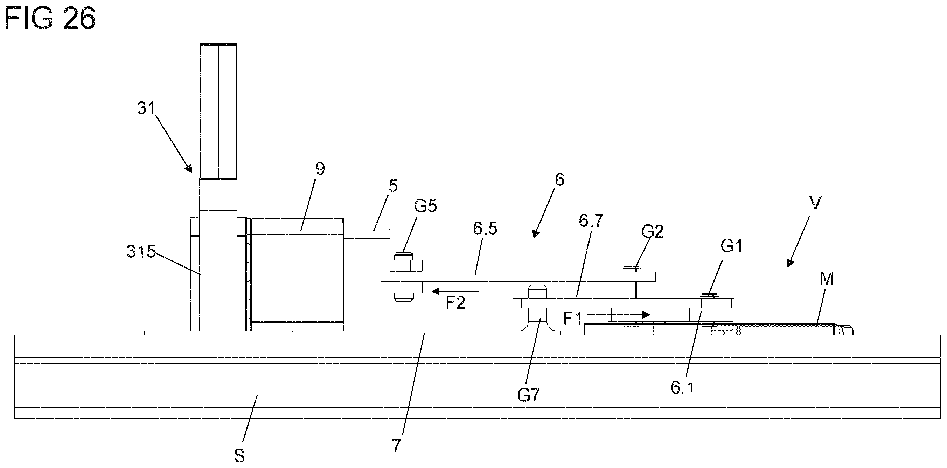

Die Figuren 6A bis 26 zeigen ausschnittsweise weitere Details von Ausführungsvarianten einer vorgeschlagenen Fixierungsvorrichtung, wie sie insbesondere für einen Fahrzeugsitz 1 der Figuren 2A bis 2C zum Einsatz kommen kann. Grundsätzlich kann eine Ausführungsvariante einer vorgeschlagenen Fixierungsvorrichtung auch bei anderen Objekten zum Einsatz kommen, insbesondere bei Objekten, die manuell in eine gewünschte Fixierungsposition überführt werden, also beispielsweise durch einen Nutzer an einer Fixierungsposition abgestellt werden.

Die Figuren 6A bis 26 veranschaulichen dabei in unterschiedlichen Ansichten eine fremdkraftbetätigte Fixierung mithilfe eines verschieblichen Verriegelungselements in Form eines Verriegelungsschlittens 7 der Fixierungsvorrichtung.

Bei der in den Figuren 6A bis 26 dargestellten Ausführungsvarianten kann jeweils ein Fixierungselement 31 z.B. starr an einer Unterseite des Fahrzeugsitzes 1 vorstehend ausgebildet sein. Zur Einführung des Fixierungselements, das hier als Verriegelungszunge 31 ausgebildet ist, in eine Fixierungsöffnung an der Innenraumfläche I, muss folglich der Fahrzeugsitz 1 oder zumindest eine das Fixierungselement 31 tragende Komponente des Fahrzeugsitzes 1, wie z.B. die Basis 12, so weit abgesenkt werden, dass ein Fixierungsabschnitt 311 des Fixierungselements 31 in die Fixierungsöffnung O1 eintauchen kann. Dies kann beispielsweise über absenkbare Räder des Fahrzeugsitzes 1 erreicht werden.

Für die Fixierung der Verriegelungszunge 31 der Figuren 6A bis 26 an der Innenraumfläche I ist vorliegend der Verriegelungsschlitten 7 als Teil einer Verriegelungseinrichtung V der Fixierungsvorrichtung vorgesehen. Der Verriegelungsschlitten 7 - mit einem Verriegelungsblech an seiner Oberseite - ist unterhalb der Innenraumfläche I über mindestens eine Führungsschiene S entlang einer Längsachse LA in zueinander entgegengesetzte Verstellrichtungen V1 und V2 verschieblich. Die Verstellrichtungen V1 und V2 verlaufen hierbei jeweils quer zu einer Einführrichtung E, entlang der die Verriegelungszunge 31 in eine jeweilige Fixierungsöffnung O1 an der Innenraumfläche I einführbar ist.

Die Figuren 6A bis 17 zeigen eine erste Ausführungsvariante einer vorgeschlagenen Fixierungsvorrichtung.

In der Figur 6A ist das als Verriegelungszunge 31 ausgestaltete Fixierungselement noch oberhalb der Fixierungsöffnung O1 in der Innenraumfläche I angeordnet, jedoch bereits bestimmungsgemäß oberhalb der Fixierungsöffnung O1 positioniert, sodass die Verriegelungszunge 31 entlang der Einführrichtung E bestimmungsgemäß abgesenkt werden kann. Die Verriegelungszunge 31 weist vorliegend einen Schaftabschnitt 310 auf, an dessen Ende sich der Fixierungsabschnitt 311 mit quer vorstehenden Haltenasen 311.1, 311.2 für die formschlüssige Verriegelung mit dem Verriegelungsschlitten 7 anschließt. Zur verbesserten Einführbarkeit des Fixierungsabschnitts 311 in die Fixierungsöffnung O1 weist der Fixierungsabschnitt 311 endseitig einen keilförmigen oder konusförmigen Einführbereich 3110 auf. Zusätzlich ist an der Verriegelungszunge 31 ein Kontaktabschnitt 315 vorgesehen. Dieser Kontaktabschnitt 315 enthält Kontaktierungsbereiche, zum Beispiel in Form von Buchsen, an die ein fahrzeugseitiger (Steck-) Verbinder 5 gesteckt werden kann, um eine elektrisch leitende Verbindung herzustellen und beispielsweise den Fahrzeugsitz 1 (oder ein anderes Innenraumobjekt) an eine elektrische Stromversorgung und/oder eine Steuerelektronik des Fahrzeugs F anzuschließen, wenn der Fahrzeugsitz 1 bestimmungsgemäß an der Innenraumfläche I fixiert ist. Vorliegend erstreckt sich der Kontaktierungsabschnitt 315 exemplarisch entlang einer Längserstreckungsrichtung der Verriegelungszunge 31 und sowohl im Bereich des Schaftabschnitts 310 als auch des Fixierungsabschnitts 311.

Der Verbinder 5 für die elektrische Kontaktierung der bestimmungsgemäß verriegelten Verriegelungszunge 31 ist vorliegend Teil der Verriegelungseinrichtung V der Fixierungsvorrichtung. Über eine Verstellmechanik 6 der Verriegelungseinrichtung V ist der Verbinder 5 verstellbar, um nach dem Einführen der Verriegelungszunge 31 in die Fixierungsöffnung O1 mit deren Kontaktabschnitt 315 verbunden zu werden. Über die Verstellmechanik 6 der Verriegelungseinrichtung V ist dabei der vorliegend mit mehreren, in einer Reihe angeordneten Kontaktierungspins 55 ausgebildete Verbinder 5 relativ zu dem Verriegelungsschlitten 7 verschieblich. Über die Verstellmechanik ist zunächst der Verriegelungsschlitten 7 in eine Verriegelungsposition verstellbar, in der die Verriegelungszunge 31 mit dem Verriegelungsschlitten 7 verriegelt ist, bevor im Anschluss der Verbinder 5 mit dem Kontaktabschnitt 315 der Verriegelungszunge 31 verbunden wird.

Über die Verstellmechanik 6 wird vorliegend eine über ein drehbares Antriebselement in Form einer Kulissenscheibe 60 erzeugte Antriebskraft in zwei Verstellkräfte umgesetzt, über die sequenziell sowohl der Verriegelungsschlitten 7 als auch der Verbinder 5 verstellt werden. Hierbei sind der Verriegelungsschlitten 7 und der an dem Verriegelungsschlitten 7 verschieblich gelagerte Verbinder 5 mithilfe der Kulissenscheibe 60 zueinander gegenläufig entlang der Längsachse LA verstellbar, um einerseits die Verriegelungszunge 31 an dem Verriegelungsschlitten 7 zu verriegeln und andererseits die Kontaktierungspins 55 des Verbinders 5 an den Kontaktabschnitt 315 der Verriegelungszunge 31 zu stecken. Die Antriebskraft zur Drehung der Kulissenscheibe 60 wird vorliegend von einem Antriebsmotor M der Verriegelungseinrichtung 1 aufgebracht, der an der Führungsschiene S fixiert ist.

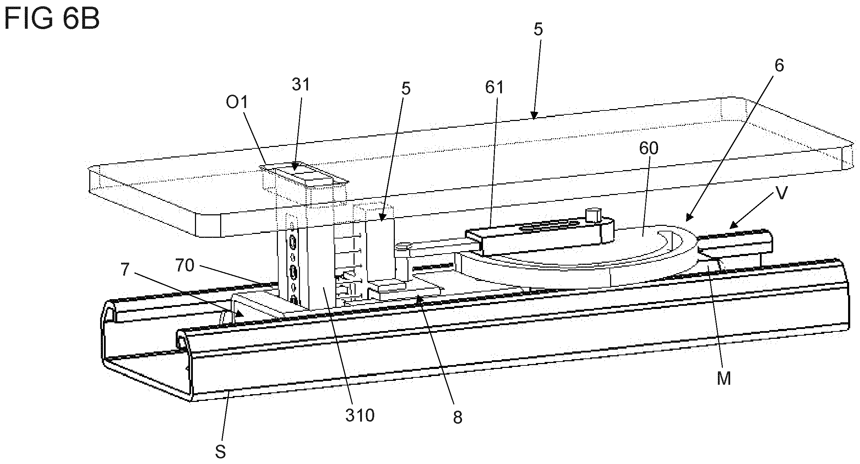

Wenn die Verriegelungszunge 31 entlang der Einführrichtung E entsprechend der Figur 6A in die Fixierungsöffnung O1 eingeführt wird, liegt der Verriegelungsschlitten 7 mit dem hieran verschieblich gehaltenen Verbinder 5 in einer Freigabeposition vor. Eine an dem Verriegelungsschlitten 7 vorgesehene Einführöffnung 70 liegt damit unterhalb der Innenraumfläche I der Fixierungsöffnung O1 gegenüber, sodass der Fixierungsabschnitt 311 der Verriegelungszunge 31 auch in die Einführöffnung 70 des Verriegelungsschlittens 7 eingreifen kann. Ist die Verriegelungszunge 31 dann entsprechend der Figur 6B so weit abgesenkt, dass der Fixierungsabschnitt 311 mit seinen Halternasen 311.1 und 311.2 in die Einführöffnung 70 des Verriegelungsschlittens 7 eingreift, erfolgt angetrieben von dem Antriebsmotor M die Verriegelung und Kontaktierung der Verriegelungszunge 31.

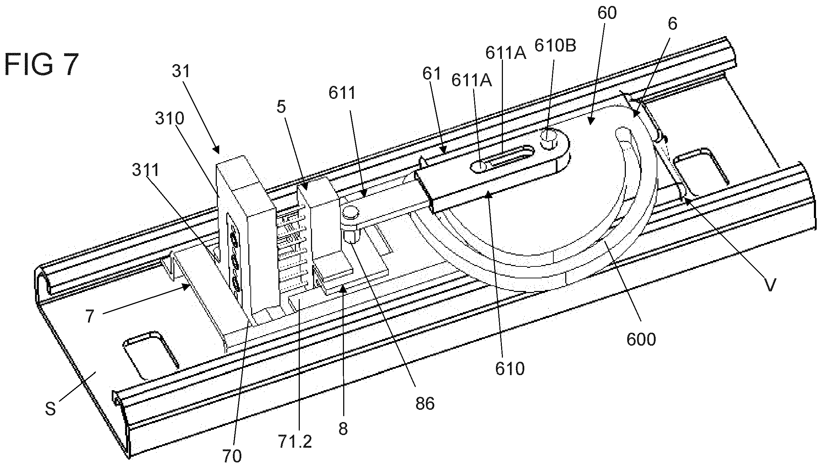

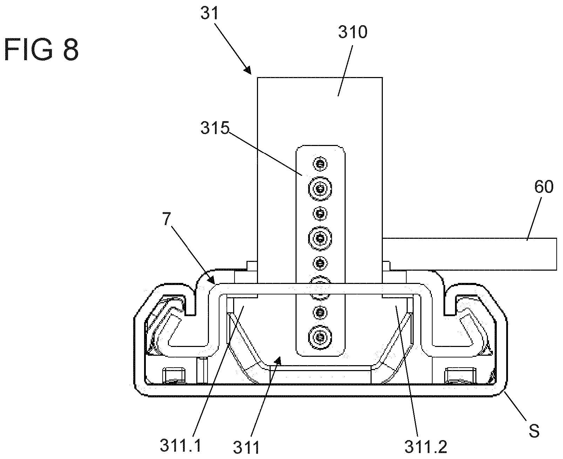

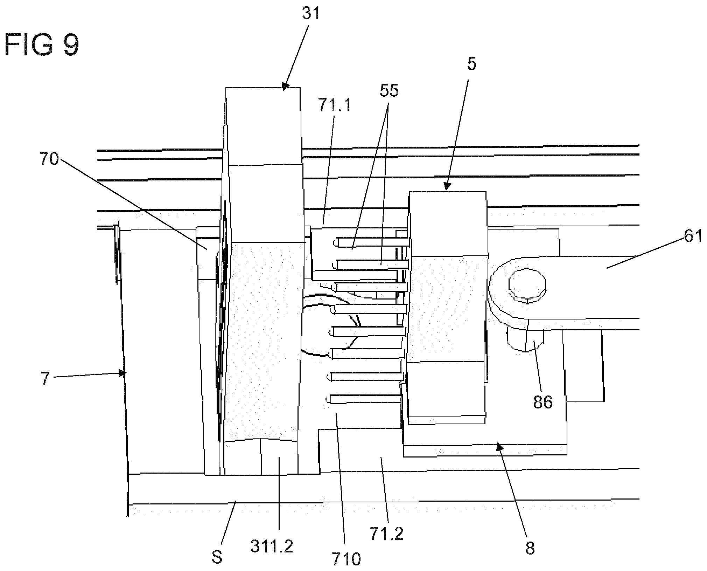

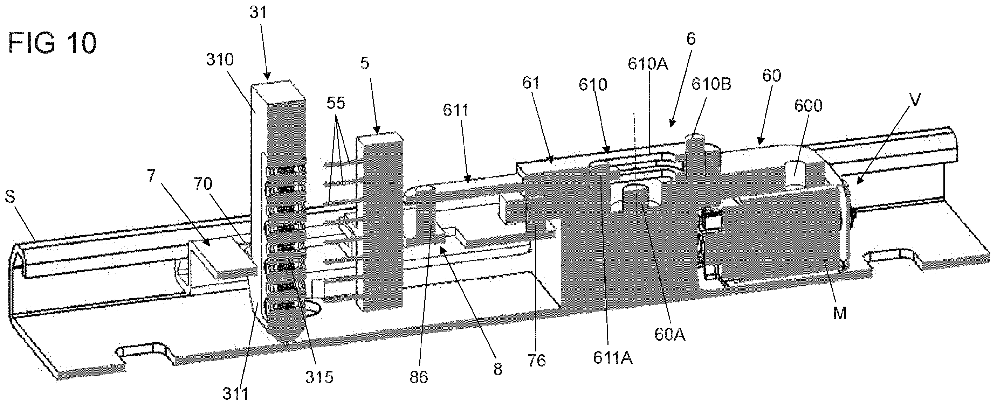

Dabei liegt entsprechend der perspektivischen Draufsicht der Figur 7, der Vorderansicht der Figur 8, der vergrößerten perspektivischen Ansicht der Figur 9 und der längs geschnittenen Ansicht der Figur 10 der Verbinder 5 an einem Kontaktierungsschlitten 8 der Verriegelungseinrichtung V mit seinen Kontaktierungspins 55 zunächst beabstandet zu dem Kontaktabschnitt 315 der Verriegelungszunge 31 vor. Gleichzeitig sind in dieser Ausgangslage auch noch an dem Verriegelungsschlitten 7 respektive dessen Verriegelungsblech ausgebildete Verriegelungsstege 71.1 und 71.2 zu den Haltenasen 311.1 und 311.2 der Verriegelungszunge 31 entlang der Längsachse LA beabstandet. Der Fixierungsabschnitt 311 ist jedoch bereits so weit in die Einführöffnung 70 des Verriegelungsschlittens 7 eingeführt, dass durch Längsverschiebung des Verriegelungsschlittens 7 entlang der Verstellrichtung V1 die Verriegelungsstege 71.1, 71.2 über die Haltenasen 311.1, 311.2 hinweg gefahren werden können. Derart werden, betrachtet entlang der Einführrichtung E, die Haltenasen 311.1 und 311.2 von den verriegelungsschlittenseitigen Verriegelungsstegen 71.1 und 71.2 überdeckt respektive die Verriegelungsstege 71.1, 71.2 von den Haltenasen 311.1, 311.2 hintergriffen.

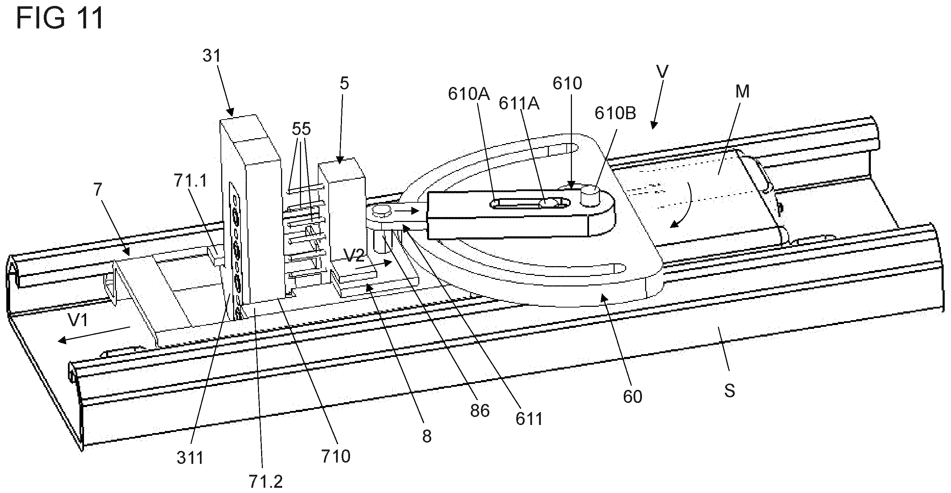

Die Verschiebung des Verriegelungsschlittens 7 entlang der Längsachse LA in Verstellrichtung V1 wird dabei von der Kulissenscheibe 60 angetrieben, wenn diese mithilfe des Antriebsmotors M um eine Scheibendrehachse 60A gedreht wird. So bildet die Kulissenscheibe 60 eine sich um die Scheibendrehachse 60A erstreckende Kulisse 600 aus, in die ein Koppelelement in Form eines Koppelzapfens 76 des Verriegelungsschlittens 7 eingreift und hierin gleitend geführt ist. Über die derart bereitgestellte Kulissenführung wird eine Drehbewegung der Kulissenscheibe 60 in eine Längsbewegung des Verriegelungsschlittens 7 entlang der Längsachse LA umgesetzt. Die Kulissenscheibe 60 übersetzt somit ein von dem Antriebsmotor M erzeugtes Antriebsdrehmoment und eine damit einhergehende Antriebskraft in eine erste Verstellkraft F1 auf den Verriegelungsschlitten 7, um den Verriegelungsschlitten 7 aus der Freigabeposition in eine Verriegelungsposition entsprechend den Figuren 11, 12 und 13 zu verstellen.

In der Verriegelungsposition des Verriegelungsschlittens liegt der Fixierungsabschnitt 311 der Verriegelungszunge 31 in einem zwischen den Verriegelungsstegen 71.1 und 71.2 gebildeten Verriegelungsspalt 710 vor. Über eine an Oberseiten der Haltenasen 311.1 und 311.2 vorgesehene, rampenförmig ansteigende Spannflächen wird der Fixierungsabschnitt 311 der Verriegelungszunge 31 mit der Verstellung des Verriegelungsschlittens 7 in seine Verriegelungsposition nicht nur an dem Verriegelungsspalt 710 sperrend formschlüssig verriegelt, sondern auch in der Einführung E gespannt.

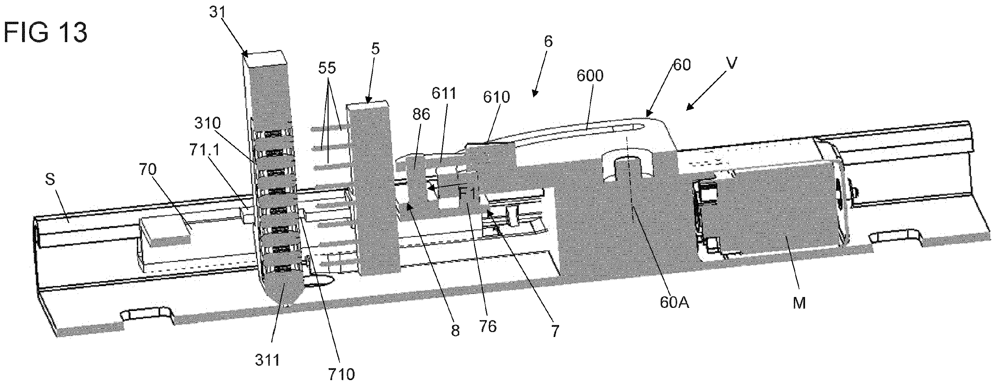

Zu der bereits an dem Verriegelungsschlitten 7 verriegelten Verriegelungszunge 31 ist der Verbinder 5 zunächst noch weiterhin (bezogen auf die Längsachse LA) axial beabstandet. So ist über die Verstellmechanik 6 erreicht, dass bei einem Drehen der Kulissenscheibe 60 zunächst nur der Verriegelungsschlitten 7 in Verstellrichtung V1 auf die Verriegelungszunge 31 zu verschoben wird, während der Verbinder 5 zunächst gegenläufig hierzu aus einer Ausgangsposition in eine Zwischenposition von der Verriegelungszunge 31 weg verstellt wird. Hierbei wird über die Verstellmechanik 6 eine Verstellkraft F2 auf den den Verbinder 5 verschieblich an dem Verriegelungsschlitten 7 lagernden Kontaktierungsschlitten 8 ausgeübt, um den Kontaktierungsschlitten 8 mit dem Verbinder 5 in einer ersten Phase der Verriegelung entlang der Längsachse LA relativ zu dem Verriegelungsmittel 7 in die entgegengesetzte Verstellrichtung V2 zu verstellen (vergleiche insbesondere Figuren 11 und 13). Der Verbinder 5 kann grundsätzlich an dem Kontaktierungsschlitten 8 als separate Komponente fixiert oder hiermit einstückig ausgebildet sein.

Für die Kopplung der Kulissenscheibe 60 mit dem Kontaktierungsschlitten 8 weist die Verstellmechanik 6 zusätzlich eine Übertragungsbaugruppe 61 auf. Teil der Übertragungsbaugruppe 61 ist dabei insbesondere eine an der Kulissenscheibe 60 angelenkte Führungshülse 610. Die Führungshülse 610 ist um eine Schwenkachse 610B an der Kulissenscheibe 60 schwenkbar gehalten. Die Schwenkachse 610B der Führungshülse 610 ist zu der Scheibendrehachse 60A radial versetzt.

An der Führungshülse 610 ist ein Übertragungshebel 611 der Übertragungsbaugruppe 61 verschieblich gelagert. Der Übertragungshebel 611 weist an einem Hebelende einen Führungsstift 611A auf, der in einer längserstreckten Führungskulisse 610A der Führungshülse 610 verschieblich ist. Über die damit bereitgestellte Kulissenführung zwischen der Führungshülse 610 und dem Übertragungshebel 611 lässt sich die Drehbewegung der Kulissenscheibe 60 in eine translatorische Verstellbewegung des Kontaktierungsschlittens 8 übersetzen. Hierzu ist ein aus der Führungshülse 610 vorstehendes Hebelende des Übertragungshebels 611 an einem Verbindungszapfen 860 des Kontaktierungsschlittens 8 angelenkt.

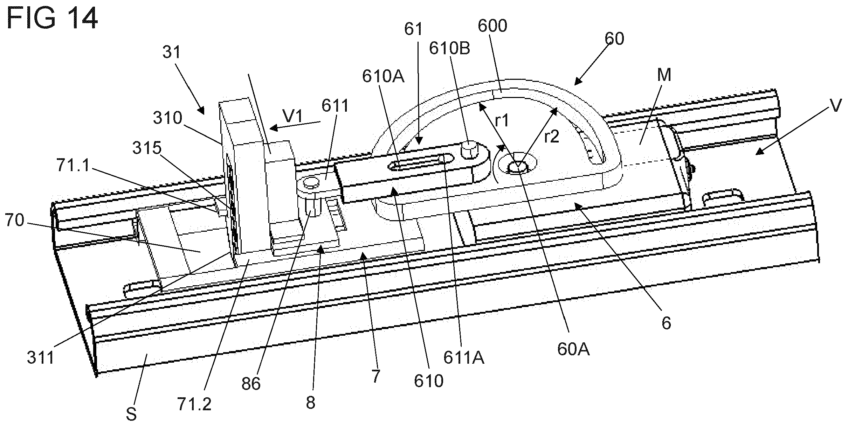

Wie anhand der Figuren 11, 12 und 13 näher veranschaulicht ist, sind vorliegend die über die Kulissenscheibe 60 und den verriegelungsschlittenseitigen Koppelzapfen 76 bereitgestellte Kulissenführung und die an der Kulissenscheibe 60 angelenkte Übertragungsbaugruppe 61 derart aufeinander abgestimmt, dass eine Drehbewegung der Kulissenscheibe 60 um die Scheibendrehachse 60A - in einer ersten Verriegelungsphase und damit einem ersten Drehbereich der Kulissenscheibe 60 - zu zueinander gegenläufigen Verstellbewegungen des Verriegelungsschlittens 7 und des Verbinders 5 führt. Wird die Kulissenscheibe 60 dann weiter (in dieselbe Drehrichtung um die Scheibendrehachse 60A) gedreht, wird über die Verstellmechanik 6 und die Übertragungsbaugruppe 61 eine Verstellkraft F2 auf den Kontaktierungsschlitten 8 ausgeübt, um diesen in Verstellrichtung V1 aus einer zuvor eingenommenen Zwischenposition in eine Kontaktierungsposition zu verschieben. Dies ist anhand der Figuren 14 bis 17 näher veranschaulicht.

So wird über die weitere Drehung der Kulissenscheibe 60 und das Zusammenwirken der Führungshülse 610 mit dem Übertragungshebel 611 die in Verstellrichtung V1 wirkende Verstellkraft F2 an dem kontaktierungsschlittenseitigen Verbindungszapfen 86 aufgebracht. Hierdurch wird der Kontaktierungsschlitten 8 mit dem hieran vorgesehenen Verbinder 5 entlang einer Führung 75 des Verriegelungsschlittens 7 (relativ zu dem Verriegelungsschlitten 7) auf dem Kontaktabschnitt 315 der Verriegelungszunge 31 zu verstellt, bis die Kontaktierungspins 55 des Verbinders 5 in die Buchsen an dem Kontaktabschnitt 315 eingesteckt sind.

Um die Verstellbewegungen und die diese hervorrufenden Verstellkräfte F1 und F2 auf den Verriegelungsschlitten 7 einerseits und den Verbinder 5 respektive dessen Kontaktierungsschlitten 8 andererseits für die unterschiedlichen Verriegelungsphasen und damit verbundenen Drehwinkelbereiche der Kulissenscheibe 60 aufeinander abzustimmen, weist die Kulisse 600 der Kulissenscheibe 60 vorliegend wenigstens zwei unterschiedlich stark gekrümmte und gegebenenfalls unterschiedlichen Kreisbahnen folgende Bereiche auf. Die unterschiedlichen Bereiche der Kulisse 600 sind dabei insbesondere durch unterschiedliche Radien r1, r2 und damit Abstände zu der Scheibendrehachse 60A gekennzeichnet. Derart lässt sich dann beispielsweise bei einer Drehung der Kulissenscheibe in der zweiten Verriegelungsphase und damit in einem zweiten Drehwinkelbereich vermeiden, dass der Verriegelungsschlitten 7 weiter mit einer Verstellkraft in Richtung der Verriegelungszunge 31 beaufschlagt wird, während die Verstellung des Verbinders 5 in seine Kontaktierungsposition erfolgt.

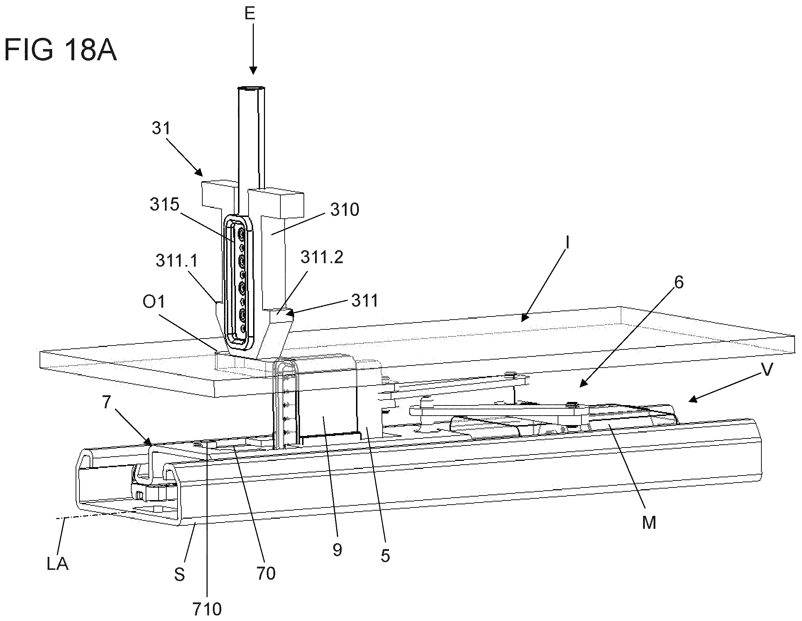

Die Figuren 18A bis 26 zeigen eine weitere Ausführungsvariante mit einer alternativ ausgestalteten Verriegelungseinrichtung V.

Auch bei dieser Ausführungsvariante ist ein Verriegelungsschlitten 7 vorgesehen, der unterhalb der Innenraumfläche I an einer Führungsschiene S verschieblich gelagert ist. Im Unterschied zu der Ausführungsvariante der Figuren 6A bis 17 ist bei dieser Ausführungsvariante jedoch eine alternativ ausgeführte Verstellmechanik 6 für die fremdkraftbetätigte Verstellung des Verriegelungsschlittens 7 einerseits und eines Verbinders 5 andererseits vorgesehen.

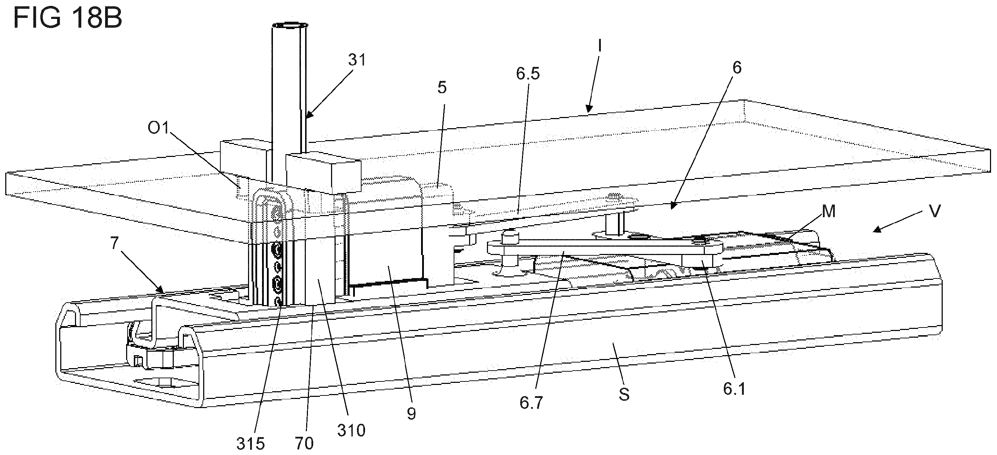

Die Figur 18A zeigt hierbei zunächst erneut die Freigabelage des Verriegelungsschlittens 7, in der die noch oberhalb der Fixierungsöffnung O1 positionierte Verriegelungszunge 31 mit ihrem Fixierungsabschnitt 311 entlang der Einführrichtung E durch die Fixierungsöffnung O1 hindurch in die Einführöffnung 70 des Verriegelungsschlittens 7 eingeführt werden kann. Greift die Verriegelungszunge 31 entsprechend der Figur 18B mit ihrem Fixierungsabschnitt 311 bestimmungsgemäß in die Fixierungsöffnung 70 des Verriegelungsschlittens 7 ein, kann die Verriegelung - gesteuert über den Antriebsmotor M der Verriegelungseinrichtung V - vorgenommen werden.

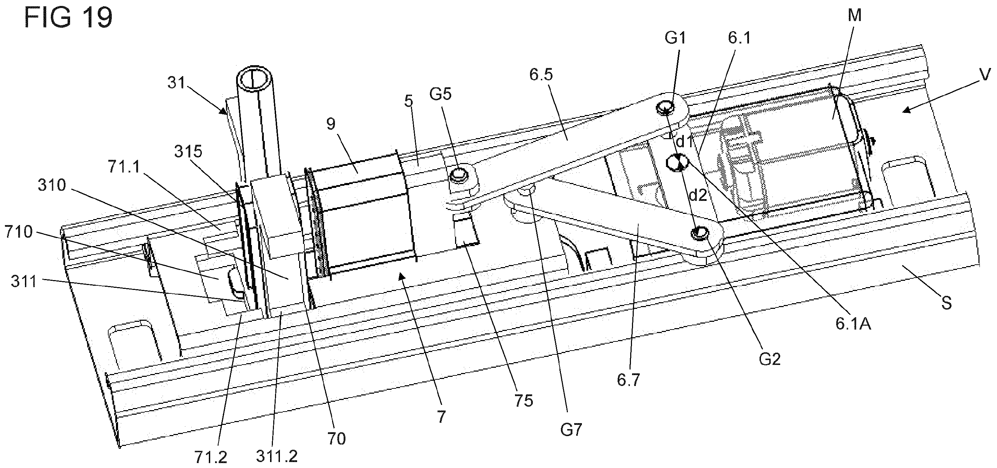

Ausgehend von der in den Figuren 19 bis 23 in unterschiedlichen Ansichten dargestellten Ausgangslage wird dabei mithilfe der Verriegelungseinrichtung V der Verriegelungsschlitten 7 in eine Verriegelungsposition entlang der Verstellrichtung V2 gezogen und gleichzeitig gegenläufig hierzu der Verbinder 5 in seine Kontaktierungsposition entlang der Verstellrichtung V1 gedrückt. So sind bei der Ausführungsvariante der Figuren 18A bis 26 die einen Verriegelungsspalt 70 berandenden Verriegelungsstege 71.1, 71.2 des Verriegelungsschlittens 7, auf die Einführöffnung 70 bezogen, in einem in Verstellrichtung V1 liegenden Abschnitt des Verriegelungsschlittens 7 vorgesehen. Der Verriegelungsschlitten 7 muss dementsprechend in Verstellrichtung V2 entlang der Längsachse LA an der Führungsschiene S entlang verschoben werden, um die Verriegelungszunge 31 bestimmungsgemäß an der Innenraumfläche I zu verriegeln.

Die dafür vorgesehene Verstellmechanik 6 weist hierbei erneut ein einzelnes Antriebselement, hier in Form eines Antriebshebels 6.1, auf. Dieser Antriebshebel 6.1 ist von dem Antriebsmotor M um eine Hebelschwenkachse 6.1A fremdkraftbetätigt schwenkbar. Die Verstellmechanik 6 umfasst ferner eine Hebelanordnung mit zwei Übertragungshebeln 6.5 und 6.7, die jeweils an dem Antriebshebel 6.1 angelenkt sind. Ein erster Übertragungshebel 6.7 ist mit seinem Hebelende über ein Gelenk G2 an einem (ersten) Hebelende des Antriebshebels 6.1 angelenkt. Mit seinem anderen Hebelende ist der erste Übertragungshebel 6.7 über ein Gelenk G7 an dem Verriegelungsschlitten 7 angelenkt. Durch Drehung des Antriebshebel 6.1 um die Hebelschwenkachse 6.1A kann somit eine Verstellkraft F1 auf den Verriegelungsschlitten 7 ausgeübt werden, um den Verriegelungsschlitten 7 entlang der Führungsschiene S translatorisch zu verschieben.

Während ein erstes Hebelende des Antriebshebels 6.1 mit dem ersten Übertragungshebel 6.7 für den Verriegelungsschlitten 7 verbunden ist, ist an dem anderen, zweiten Hebelende des Antriebshebels 6.1 ein zweiter Übertragungshebel 6.5 der Hebelanordnung angelenkt. Der zweite Übertragungshebel 6.5 ist folglich über ein Gelenk G1 mit dem Antriebshebel 6.1 gelenkig verbunden. Ferner ist der zweite Übertragungshebel 6.5 über ein Gelenk G5 an dem Verbinder 5 angelenkt. Der Verbinder 5 ist vorliegend erneut in einer Führung 75 des Verriegelungsschlittens 7 verschieblich gehalten. Durch Drehung des Antriebshebel 6.1 kann folglich über den zweiten Übertragungshebel 6.5 eine (zweite) Verstellkraft F2 auf den Verbinder 5 ausgeübt werden, um diesen translatorisch relativ zu dem Verriegelungsmittel 7 an der Führung 75 entlang zu verstellen.

Vorliegend ist der Verbinder 5 zusätzlich in einem hülsenförmigen Führungskörper 9 gehalten, der an dem Verriegelungsschlitten 7 vorgesehen ist. Dieser Führungskörper 9 weist eine Öffnung auf, die der in den Verriegelungsschlitten 7 eingreifenden Verriegelungszunge 31 gegenüber liegt und aus der der Verbinder 5 ausgefahren werden kann, um den Verbinder 5 an den Kontaktabschnitt 315 der Verriegelungszunge 31 zu stecken.

Um durch die Drehung des Antriebshebels 6.1 in eine einzige Drehrichtung um die Hebelschwenkachse 6.1A sowohl den Verriegelungsschlitten 7 in seine Verriegelungsposition in Verstellrichtung V2 zu ziehen als auch den Verbinder 5 hierzu gegenläufig und relativ zu dem Verriegelungsschlitten 7 in seine Kontaktierungsposition zu drücken, sind die Übertragungshebel 6.7 und 6.5 mit unterschiedlichen Hebelenden des Antriebshebels 6.1 verbunden. Durch eine Drehbewegung des Antriebshebels 6.1 um seine Hebelschwenkachse 6.1A kann somit das eine Hebelende, an dem der erste Übertragungshebel 6.7 angelenkt ist, von der Verriegelungszunge 31 weg und das andere, mit dem zweiten Übertragungshebel 6.5 verbundene Hebelende auf die Verriegelungszunge 31 zu verstellt werden. Um in diesem Zusammenhang die aus einer Drehbewegung des Antriebshebels 6.1 resultierenden Verstellwege des Verriegelungsschlittens 7 und des Verbinders 5 unterschiedlich zu gestalten, können auch Abstände d2, d1 der jeweiligen Gelenke G2, G1 von der Hebelschwenkachse 6.1A unterschiedlich sein.

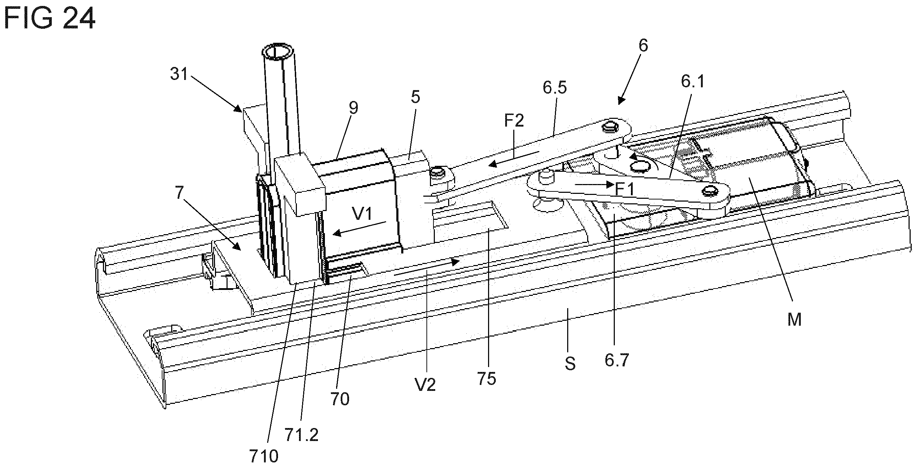

Bei einer motorisch von dem Antriebsmotor M angetriebenen Drehung des Antriebshebels 6.1 wird jedenfalls erreicht, dass entsprechend den Darstellungen der Figuren 24, 25 und 26 im Bereich der Gelenke G7 und G5 erste und zweite Verstellkräfte F1 und F2 an dem Verriegelungsschlitten 7 und dem Verbinder 5 angreifen, über die der Verriegelungsschlitten 7 entlang der Längsachse LA in Verstellrichtung V2 in seine Verriegelungsposition gezogen wird und gleichzeitig der Verbinder 5 entlang der Längsachse LA relativ zu dem Verriegelungsschlitten 7 in die entgegengesetzte Verstellrichtung V1 in seine Kontaktierungsposition gedrückt wird.

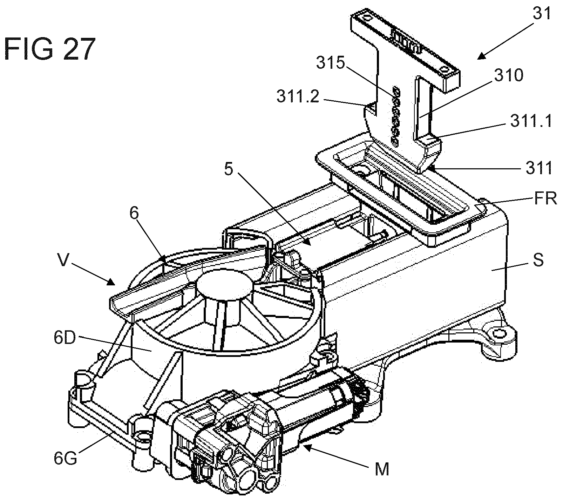

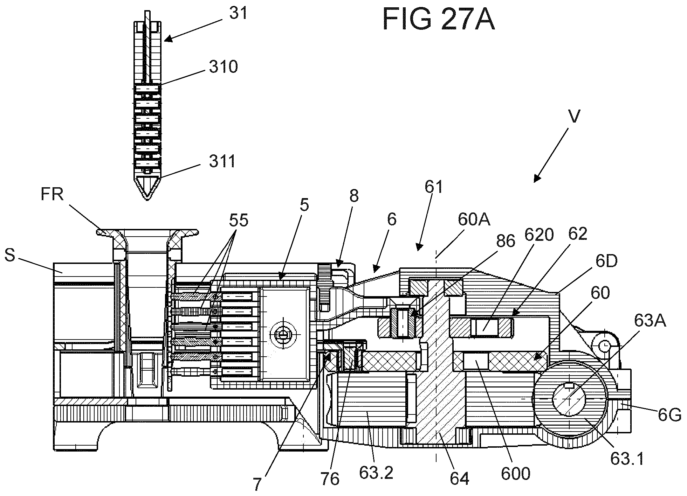

Die Figuren 27 bis 30C zeigen eine weitere Ausführungsvariante einer vorgeschlagenen Fixierungsvorrichtung mit einer Verriegelungseinrichtung V, bei der der Verbinder 5 und der Verriegelungsschlitten für die Verriegelung der Verriegelungszunge 31 durch eine fremdkraftbetätigte Verstellung zueinander gegenläufig bewegt werden können. Um bei dieser Ausführungsvariante eine von dem Antriebsmotor M aufgebrachte Antriebskraft in zwei gegenläufige Verstellbewegungen des Verriegelungsschlittens 7 und des Verbinders 5 umzusetzen, ist die Verstellmechanik 6 mit einer Übertragungsbaugruppe 61 vorgesehen, die zwei drehfest miteinander gekoppelte Kulissenscheiben 60, 62 umfasst.

Der Antriebsmotor M ist hier an ein Gehäuse der Verriegelungseinrichtung V angeflanscht, das ein (unteres) Gehäuseteil 6G und einen Gehäusedeckel 6D umfasst. In einem zwischen dem Gehäuseteil 6G und dem Gehäusedeckel 6G definierten Gehäuseraum ist die Übertragungsbaugruppe 61 sowie ein Getriebeeinrichtung untergebracht. Die Getriebeeinrichtung wird vorliegend durch eine mit einer Motorwelle des Antriebsmotors M drehfest verbundene Schnecke 63.1 und ein hiermit kämmendes Schneckenrad 63.2 gebildet. Das Schneckenrad 63.2 ist drehfest mit einer Drehwelle 64 verbunden, an der die Kulissenscheiben 60 und 62 drehfest fixiert sind. Über das Schneckengetriebe 63.1, 63.2 kann eine Drehachse 63a der Motorwelle des Antriebsmotors M um 90° gedreht zu der (Antriebs-) Drehachse 60A verlaufen, die durch die Drehwelle 64 definiert ist und um die die Kulissenscheiben 60 und 62 drehbar sind.

Die eine (erste) Kulissenscheibe 60 bildet bei der Ausführungsvariante der Figuren 27 bis 30C analog zu der Ausführungsvariante der Figuren 6A bis 17 das Antriebselement der Verriegelungseinrichtung V, über das der Verriegelungsschlitten 7 zu einer Verstellbewegung entlang der Schiene S antreibbar ist. An einer um die Antriebsdrehachse 60A verlaufenden Führungskulisse 600 der (ersten) Kulissenscheibe 60 ist hierfür dementsprechend erneut ein Koppelzapfen 76 gleitend geführt, an dem der Verriegelungsschlitten 7 angelenkt ist. Derart wird bei einer Drehung der ersten Kulissenscheibe 60 in eine erste Drehrichtung der Verriegelungsschlitten 7 in die eine Verstellrichtung V2 mitgenommen, um bei eingeführter Verriegelungszunge 61 diese mit dem Verriegelungsschlitten 7 zu verriegeln.

Die weitere Kulissenscheibe 62 ist über ein Verbindungselement in Form eines Verbindungszapfens 86 mit einem Kontaktierungsschlitten 8 des Verbinders gekoppelt. Der Verbindungszapfen 86 greift hierbei gleitend in eine Führungskulisse 620 der zweiten., als Übertragungselement fungierenden Kulissenscheibe 621 ein. Der Verlauf der Führungskulisse 620 ist hierbei auf die Führungskulisse 610 der anderen Kulissenscheibe 60 derart abgestimmt, dass bei Drehung entlang derselben ersten Drehrichtung um die Antriebsdrehachse 6A aus der Kontaktierungsschlitten 8 verstellt wird. Der Verbindungszapfen 86 wird hierbei an der Führungskulisse 620 derart mitgenommen, dass der Kontaktierungsschlitten 8 entlang der Verstellrichtung V1 auf die eingesteckte Verriegelungszunge 31 zu verstellt wird.

Die Verriegelungseinrichtung V der Figuren 27 bis 30C baut vergleichsweise kompakt und erlaubt eine fremdkraftbetätigtes Verstellung sowohl des Verriegelungsmittel 7 als auch des Verbinders 5 mithilfe zweier Kulissenführungen, die an zwei drehfest mit der Drehwelle 64 verbundene Kulissenscheiben 60 und 62 gebildet sind.

Die Figuren 27 und 27A veranschaulichen hierbei zunächst einen Zustand, in dem die Verriegelungszunge 31 noch nicht an die Verriegelungseinrichtung V eingesteckt ist. Die Verriegelungszunge 31 befindet sich somit noch außerhalb der Verriegelungsöffnung O und damit bei der Ausführungsvariante der Figuren 27 bis 30C außerhalb eines Führungsrahmens FR, der oberhalb der Schiene S für die Vorgabe der Einsteckrichtung vorgesehen ist.

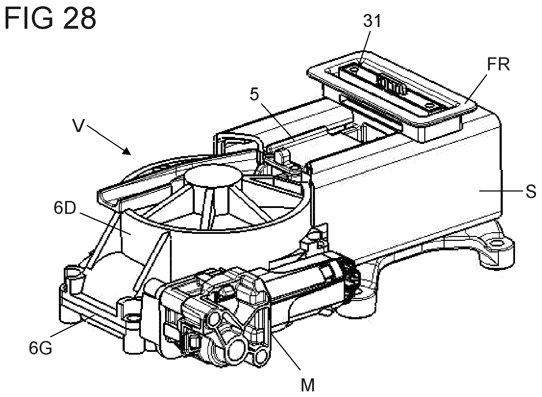

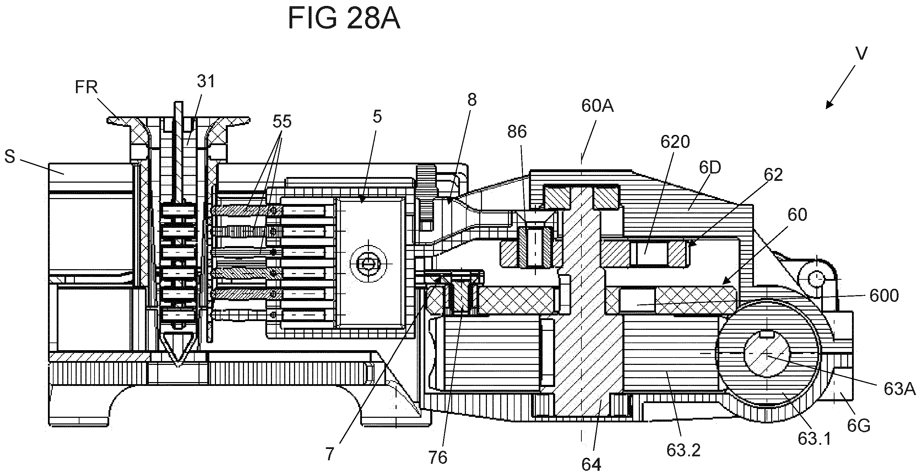

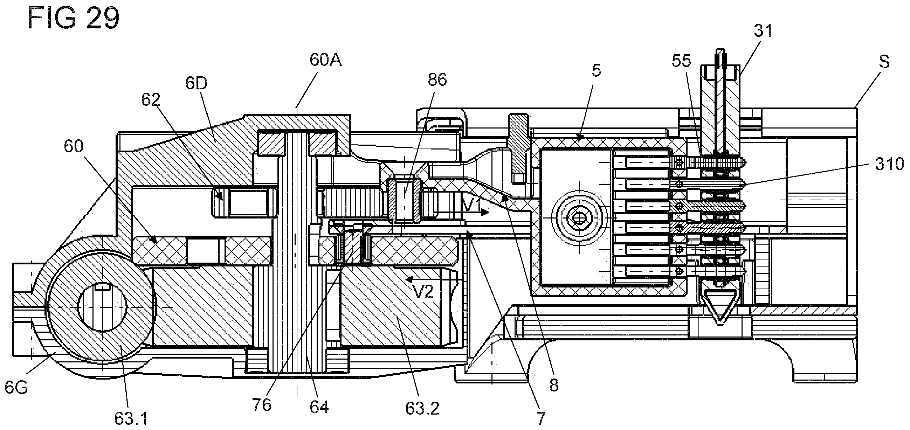

Ist die Verriegelungszunge 31 entsprechend den Figuren 28 und 28A vollständig an die Verriegelungseinrichtung V eingesteckt, kann die Verriegelung des Verriegelungsschlittens 7 und die Kontaktierung über den Verbinder 5 erfolgen. Hierbei kann das vollständige Einstecken der Verriegelungszunge 31 sensorisch, d. h. mithilfe wenigstens eines Sensors der Fixierungsvorrichtung, erkannt werden. Ein entsprechendes Sensorsignal löst dann die Betätigung des Antriebsmotors M aus. Wird der Antriebsmotor M betätigt, wird die Schnecke 63.1 um eine Motordrehachse 63A gedreht. Dies führt zu einer Drehbewegung des Schneckenrads 63.2 und damit der Drehwelle 64 um die senkrecht zu der Motordrehachse 63A verlaufende Antriebsdrehachse 60A. Die Drehbewegung der Drehwelle 64, die an dem Gehäuseteil 6G und dem Gehäusedeckel 6D drehbar gelagert ist, führt wiederum zu Drehbewegungen der Kulissenscheiben 60 und 62 entlang derselben Drehrichtung. Wie in der Schnittdarstellung der Figur 29 sichtlich ist, werden durch diese Drehbewegungen und die entsprechenden Kulissenführungen einerseits eine Verstellung des Verriegelungsschlittens 7 zur Verriegelung der Verriegelungszunge 31 und andererseits eine Verstellung des Verbinders 5 zur Kontaktierung der Verriegelungszunge 31 verursacht.

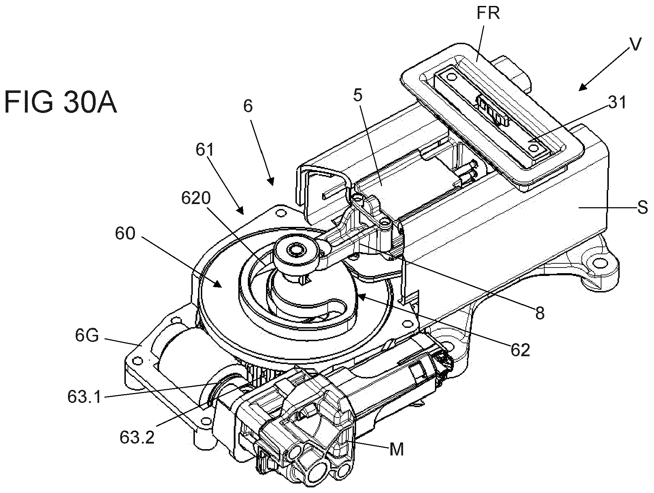

In der Figur 30A ist in perspektivischer Ansicht die Verriegelungseinrichtung V ohne Gehäusedeckel 6D in mit den Figuren 28 und 28A übereinstimmendem Zustand dargestellt. Hier ist die Verriegelungszunge 31 folglich bereits über den Führungsrahmen FR an die Verriegelungseinrichtung V gesteckt, jedoch sind noch keine Verriegelung über den Verriegelungsschlittens 7 und keine Kontaktierung über den Verbinder 5 erfolgt. Mit abgenommenem Gehäusedeckel 6D ist dabei die Übertragungsbaugruppe 61 der Verstellmechanik 6 mit den beiden Kulissenscheiben 60 und 62 besser ersichtlich. Insbesondere ist die oberhalb der als Antriebselements fungierenden (ersten) Kulissenscheibe 60 angeordnete zweite Kulissenscheibe 62 ersichtlich, über die die Verstellbewegung des Verbinders 5 gesteuert wird. Die Führungskulisse 620 der als Übertragungselement fungierenden zweiten Kulissenscheibe 62 für die Verstellung des Verbinders 5 erstreckt sich dabei um die gemeinsame Antriebsdrehachse 62A und gibt dem in die Führungskulisse 620 eingreifenden Verbindungszapfen 86 eine gewünschte Führungsbahn vor.

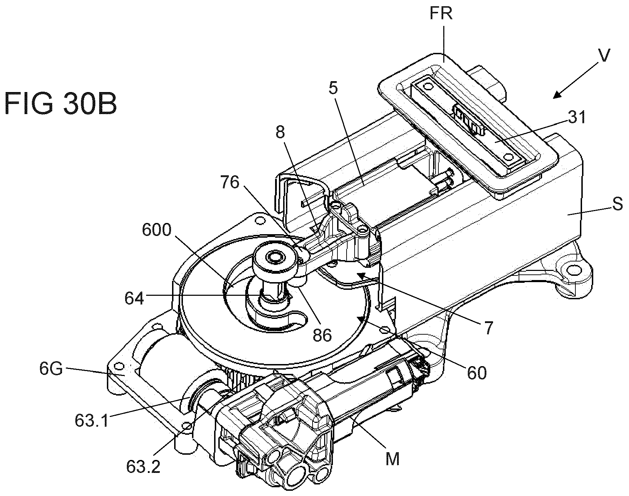

In der Figur 30B ist mit in der Figur 30A übereinstimmender Ansicht die zweite Kulissenscheibe 62 für die Verstellung des Verbinders 5 ausgespart, sodass die darunter angeordnete erste Kulissenscheibe 60 für den Verriegelungsschlitten 7 besser ersichtlich ist. Aus der Figur 30B ist dann auch insbesondere nochmals der zu der Führungskulisse 620 der zweiten Kulissenscheibe 62 abweichende Verlauf der Führungskulisse 600 der ersten Kulissenscheibe 60 ersichtlich, die dem verriegelungsschlittenseitigen Koppelzapfen 76 die gewünschte Führungsbahn vorgibt.

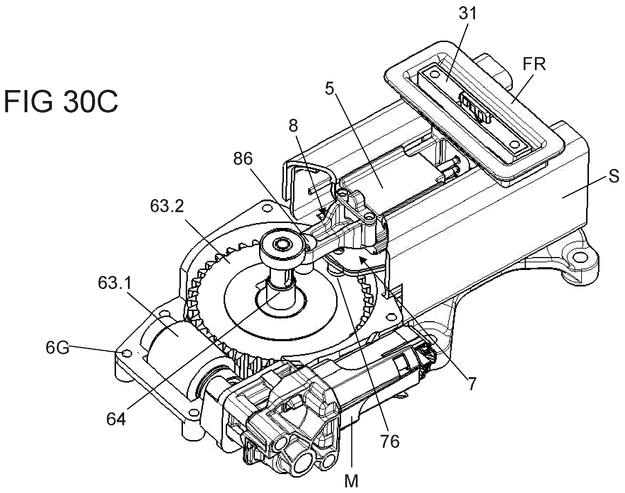

In der perspektivisch mit den Figuren 30A und 30B übereinstimmender Ansicht der Figur 30C ist zusätzlich die als Antriebselement fungierende erste Kulissenscheibe 60 ausgespart und damit der Blick auf das Schneckengetriebe 63.1, 63.2 der Verriegelungseinrichtung V freigegeben.

Wird die Kulissenscheibe 60 der Ausführungsvariante der Figuren 6A bis 17 oder 27 bis 30C oder der Antriebshebel 6.1 der Ausführungsvariante der Figuren 18 bis 26 in eine entgegengesetzte Drehrichtung gedreht, werden über die jeweilige Verstellmechanik 6 nicht nur der Verbinder 5 und die Verriegelungszunge 31 wieder voneinander getrennt, sondern auch die Verriegelung der Verriegelungszunge 31 von dem Verriegelungsschlitten 7 freigegeben. Die Verriegelungseinrichtung V erlaubt somit jeweils ein einfaches, motorisch gesteuertes crashsicheres Verriegeln der Verriegelungszunge 31 und deren elektrische Kontaktierung wie auch deren Freigabe.

### Bezugszeichenliste

- 1, 1a, 1b, 1c: Fahrzeugsitz (Innenraumobjekt)
- 10: Rückenlehne (Verstellteil)
- 11: Sitzteil (Verstellteil)
- 12: Basis
- 120: Antriebsmotor
- 121: Akku
- 122: Steckverbinder
- 123: Kopplungsabschnitt
- 12A: Antriebseinrichtung
- 2.1, 2.2: Allseitenrad
- 20: Rollenträger
- 21: Rolle
- 31: Verriegelungszunge (Fixierungselement)
- 310: Schaftabschnitt
- 311: Fixierungsabschnitt
- 311.1, 311.2: Haltenase
- 3110: Einführbereich
- 315: Kontaktabschnitt
- 32: Fixierungselement
- 4, 4a: Tag (Detektionselement)
- 5: Verbinder
- 5.1 - 5.4: Sensorelement
- 55: Kontaktierungspin (Kontaktierungselement)
- 6: Verstellmechanik
- 6.1: Antriebshebel (Antriebselement)
- 6.1A: Hebelschwenkachse (Antriebsachse)
- 6.5: Zweiter Übertragungshebel (Hebelelement)
- 6.7: Erster Übertragungshebel (Hebelelement)
- 60: Kulissenscheibe (Antriebselement)
- 600: Kulisse
- 60A: Scheibendrehachse (Antriebsachse)
- 61: Übertragungsbaugruppe
- 610: Führungshülse
- 610A: Führungskulisse
- 610B: Schwenkachse
- 611: Übertragungshebel (Hebelelement)
- 611A: Führungsstift
- 62: Zweite Kulissenscheibe (Übertragungselement)
- 620: Führungskulisse
- 63.1: Schnecke
- 63.2: Schneckenrad
- 63A: Motordrehachse
- 64: Drehwelle
- 65: Sendereinheit
- 6D: Gehäusedeckel
- 6G: Gehäuseteil
- 7: Verriegelungsschlitten (Verriegelungselement)
- 70: Einführöffnung
- 71.1, 71.2: Verriegelungssteg
- 710: Verriegelungsspalt
- 75: Führung
- 76: Koppelzapfen (Koppelelement)
- 8: Kontaktierungsschlitten
- 86: Verbindungszapfen (Verbindungselement)
- 9: Führungskörper
- A1, A2: Ankerpunkt (Fixierungsposition)
- AE: Auswertelektronik
- B: Breite
- D: Detektionseinrichtung
- d1, d2: Abstand
- E: Einführrichtung
- F: Fahrzeug
- F1, F2: Verstellkraft
- FR: Führungsrahmen
- G1, G2, G5, G7: Gelenk
- I: Innenraumfläche (Fixierungsfläche)
- L: Länge
- LA: Längsachse
- LF: Ladekante
- M: Antriebsmotor
- O1: Fixierungsöffnung
- R: Verfahrrichtung
- r1, r2: Radius / Abstand
- S: Führungsschiene (Führungselement)
- V: Verriegelungseinrichtung
- V1, V2: Verstellrichtung

## Patentansprüche

1. Fixierungsvorrichtung für eine Fixierung eines Objekts (1, 1a, 1b, 1c) an einer Fixierungsfläche (I) in einem Fahrzeug (F), mit
- mindestens einem Fixierungselement (31), das zur Fixierung des Objekts (1) mit einem Fixierungsabschnitt (311) ausgebildet ist, der für einen Eingriff in eine Fixierungsöffnung (O1)vorgesehen ist, wobei der Fixierungsabschnitt (311) entlang einer Einführrichtung (E) in die Fixierungsöffnung (O1) einführbar ist, und
- einer Verriegelungseinrichtung (V), die eingerichtet ist, in Wechselwirkung mit dem in die Fixierungsöffnung (O1) eingeführten Fixierungsabschnitt (311) das Fixierungselement (31) an der Fixierungsöffnung (O1) zu verriegeln,
wobei die Verriegelungseinrichtung (V) wenigstens ein quer zur Einführrichtung (E) verschiebliches Verriegelungselement (7) umfasst, das, zur Verriegelung des Fixierungselements (31) an der Fixierungsöffnung (O1), in eine Verriegelungsposition verstellbar ist, in der das Verriegelungselement (7) den Fixierungsabschnitt (311) gegen ein Entfernen aus der Fixierungsöffnung (O1) sperrt, und
wobei die Verriegelungseinrichtung (V) wenigstens einen Verbinder (5) mit mindestens einem Kontaktierungselement (55) umfasst und der Verbinder (5), für eine elektrische Kontaktierung eines Kontaktabschnitts (315) des in der Fixierungsöffnung (O1) eingeführten Fixierungselements (31) durch das mindestens eine Kontaktierungselement (55), in eine Kontaktierungsposition verstellbar ist,
**dadurch gekennzeichnet, dass**
das Verriegelungselement (7) und der Verbinder (5) relativ zueinander verstellbar sind und die Verriegelungseinrichtung (V) eine Verstellmechanik (6) umfasst, über die eine an der Verstellmechanik (6) angreifende Antriebskraft sowohl in eine erste Verstellkraft (F1) zum Verschieben des Verriegelungselements (7) in die Verriegelungsposition als auch in eine zweite Verstellkraft (F2) zum Verstellen des Verbinders (5) relativ zu dem Verriegelungselement (7) in die Kontaktierungsposition umsetzbar ist.

2. Fixierungsvorrichtung nach Anspruch 1, **dadurch gekennzeichnet, dass** über die Verstellmechanik (6) unter Wirkung der Antriebskraft das Verriegelungselement (7) und der Verbinder (5) zu zwei zueinander gegenläufigen Verstellbewegungen antreibbar sind, insbesondere wobei
- über die Verstellmechanik (6) unter Wirkung der Antriebskraft einerseits das Verriegelungselement (7) aus einer Freigabeposition in die Verriegelungsposition verstellbar ist und andererseits der Verbinder (5) hierzu gegenläufig
a) aus einer Ausgangsposition in eine Zwischenposition verstellbar ist, aus der der Verbinder (5) nachfolgend in die Kontaktierungsposition verstellbar ist, oder
b) aus einer Ausgangsposition in die Kontaktierungsposition verstellbar ist,
und/oder
- über die Verstellmechanik (6) das Verriegelungselement (7) unter Wirkung der Antriebskraft entlang einer Längsachse (LA) in eine erste Verstellrichtung (V1; V2) verschieblich ist, während der Verbinder (5) zu einer hierzu gegenläufigen Verstellbewegung entlang der Längsachse (LA) in eine zweite, zu der ersten Verstellrichtung (V1) entgegengesetzte Verstellrichtung (V2) verschieblich ist

3. Fixierungsvorrichtung nach Anspruch 1 oder 2, **dadurch gekennzeichnet, dass** der Verbinder (5) an dem Verriegelungselement (7) verstellbar gelagert ist, insbesondere wobei das Verriegelungselement (7) eine körperliche Führung (75) für den verschieblich an dem Verriegelungselement (7) gelagerten Verbinder (5) aufweist.

4. Fixierungsvorrichtung nach einem der vorhergehenden Ansprüche, **dadurch gekennzeichnet, dass** die Verriegelungseinrichtung (V) ein Führungselement (S) umfasst, an dem das Verriegelungselement (7) verschieblich gelagert ist, insbesondere wobei das Verriegelungselement (7) entlang einer quer zu der Einführrichtung (E) verlaufenden Führungsschiene (S) verschieblich gelagert.

5. Fixierungsvorrichtung nach einem der vorhergehenden Ansprüche, **dadurch gekennzeichnet, dass** die Verstellmechanik (6) wenigstens ein schwenkbar gelagertes Hebelelement (611; 6.5, 6.7) und/oder ein drehbar gelagertes Übertragungselement (62) zur Übertragung der ersten und/oder zweiten Verstellkraft (F1, F2) umfasst.

6. Fixierungsvorrichtung nach einem der vorhergehenden Ansprüche, **dadurch gekennzeichnet, dass** die Verstellmechanik (6) ein Antriebselement (60, 6.1) umfasst, das unter Wirkung der Antriebskraft verstellbar ist und mit mindestens einer weiteren verstellbaren Komponente (61; 6.5, 6.7; 62) der Verstellmechanik (6) zur Erzeugung der ersten und/oder zweiten Verstellkraft (F1, F2) gekoppelt ist, insbesondere wobei die mindestens eine weitere Komponente (61; 6.5, 6.7) mit dem Antriebselement (60, 6.1) gelenkig oder drehfest verbunden ist.

7. Fixierungsvorrichtung nach Anspruch 6, **dadurch gekennzeichnet, dass** das Antriebselement (60, 6.1) um eine Antriebsachse (60A, 6.1A) drehbar gelagert ist.

8. Fixierungsvorrichtung nach den Ansprüchen 5 und 7, **dadurch gekennzeichnet, dass** das Übertragungselement (62) mit dem Antriebselement (60) drehfest verbunden und um die Antriebsachse (60A) drehbar ist oder eine Schwenkachse des Hebelelements (611; 6.5, 6.7) zu der Antriebsachse (60A, 6.1A) versetzt ist.

9. Fixierungsvorrichtung nach einem der Ansprüche 6 bis 8, **dadurch gekennzeichnet, dass** das Antriebselement (60) eine Kulisse (600) aufweist, an der ein mit dem Verriegelungselement (7) verbundenes Koppelelement (76) verschieblich geführt ist.

10. Fixierungsvorrichtung nach Anspruch 7 oder 8 und nach Anspruch 9, **dadurch gekennzeichnet, dass** die Kulisse (600) an dem Antriebselement (60) um die Antriebsachse (60A) verläuft, insbesondere wobei die Kulisse (600) des Antriebselements (60) eine Führungsbahn für das Koppelement (76) definiert, bei der mindestens zwei Bereiche unterschiedliche Abstände (r1, r2) zu der Antriebsachse (60A) aufweisen.

11. Fixierungsvorrichtung nach Anspruch 8 und einem der Ansprüche 9 oder 10, **dadurch gekennzeichnet, dass** das Übertragungselement (62) ebenfalls eine Kulisse (620) aufweist, die um die Antriebsachse (60A) verläuft, insbesondere wobei an der Kulisse (620) des Übertragungselements (62) ein dem Verbinder (5) zugeordnetes Verbindungselement (86) verschieblich gelagert ist, über das bei einer Drehung des Übertragungselements (62) die zweite Verstellkraft (F2) zum Verstellen des Verbinders (5) aufbringbar ist.

12. Fixierungsvorrichtung nach Anspruch 5 und einem der Ansprüche 6 bis 8, **dadurch gekennzeichnet, dass** das Antriebselement (6.1) über eine Hebelanordnung mit mindestens zwei Übertragungshebeln (6.5, 6.7) mit dem Verriegelungselement (7) und dem Verbinder (5) gekoppelt ist, insbesondere wobei die mindestens zwei Übertragungshebel (6.5, 6.7) jeweils über ein Gelenk (G1, G2) mit dem Antriebselement (6.1) verbunden sind.

13. Fahrzeug, mit
- einem zu fixierenden Objekt (1, 1a, 1b, 1c)
- einer karosseriefesten Fixierungsfläche (I) und
- mindestens einer Fixierungsvorrichtung nach einem der Ansprüche 1 bis 12 für die Fixierung des Objekts (1, 1a, 1b, 1c) an der Fixierungsfläche (I).

14. Fahrzeug nach Anspruch 13, **dadurch gekennzeichnet, dass** die Verriegelungseinrichtung (V) der Fixierungsvorrichtung an einer karosseriefesten Fahrzeugkomponente oder an dem Objekt (1, 1a, 1b, 1c) vorgesehen ist und/oder das Objekt einen Fahrzeugsitz (1, 1a, 1b, 1c), einen Tisch und/oder eine Konsole umfasst.

15. Fahrzeugsitz mit einer Fixierungsvorrichtung nach einem der Ansprüche 1 bis 12 zur Fixierung des Fahrzeugsitzes (1, 1a, 1b, 1c) an einer Innenraumfläche (I) des Fahrzeugs (F).

## Claims

1. A fixing device for fixing an object (1, 1a, 1b, 1c) on a fixing surface (I) in a vehicle (F), comprising
- at least one fixing element (31), which for fixing the object (1) is formed with a fixing portion (311) that is provided for an engagement into a fixing opening (O1), wherein the fixing portion (311) can be introduced into the fixing opening (O1) along an introduction direction (E), and
- a locking device (V), which is adapted to lock the fixing element (31) at the fixing opening (O1) in interaction with the fixing portion (311) introduced into the fixing opening (O1),
wherein the locking device (V) comprises at least one locking element (7) shiftable transversely to the introduction direction (E), which, for locking the fixing element (31) at the fixing opening (O1), can be adjusted into a locking position in which the locking element (7) blocks the fixing portion (311) against a removal from the fixing opening (O1), and
wherein the locking device (V) comprises at least one connector (5) with at least one contacting element (55), and the connector (5), for electrically contacting a contact portion (315) of the fixing element (31) introduced into the fixing opening (O1), can be adjusted into a contacting position by the at least one contacting element (55),
**characterized in that**
the locking element (7) and the connector (5) are adjustable relative to each other and the locking device (V) comprises an adjusting mechanism (6) via which a driving force acting on the adjusting mechanism (6) can be converted both into a first adjusting force (F1) for shifting the locking element (7) into the locking position and into a second adjusting force (F2) for adjusting the connector (5) relative to the locking element (7) into the contacting position.

2. The fixing device according to claim 1, **characterized in that** via the adjusting mechanism (6) by action of the driving force the locking element (7) and the connector (5) can be driven to perform two mutually opposite adjusting movements, in particular wherein
- via the adjusting mechanism (6) by action of the driving force the locking element (7) on the one hand can be adjusted from a release position into the locking position and on the other hand the connector (5) can be adjusted in the opposite direction
a) from a starting position into an intermediate position, from which the connector (5) subsequently can be adjusted into the contacting position, or
b) from a starting position into the contacting position,
and/or
- via the adjusting mechanism (6) the locking element (7) is shiftable along a longitudinal axis (LA) in a first adjustment direction (V1; V2) by action of the driving force, while the connector (5) is shiftable in a second adjustment direction (V2) opposite to the first adjustment direction (V1) to perform an oppositely directed adjusting movement along the longitudinal axis (LA).

3. The fixing device according to claim 1 or 2, **characterized in that** the connector (5) is adjustably mounted on the locking element (7), in particular wherein the locking element (7) has a physical guide (75) for the connector (5) shiftably mounted on the locking element (7).

4. The fixing device according to any of the preceding claims, **characterized in that** the locking device (V) comprises a guide element (S) on which the locking element (7) is shiftably mounted, in particular wherein the locking element (7) is shiftably mounted along a guide rail (S) extending transversely to the introduction direction (E).

5. The fixing device according to any of the preceding claims, **characterized in that** the adjusting mechanism (6) comprises at least one pivotally mounted lever element (611; 6.5, 6.7) and/or a rotatably mounted transmission element (62) for transmitting the first and/or second adjusting force (F1, F2).

6. The fixing device according to any of the preceding claims, **characterized in that** the adjusting mechanism (6) comprises a drive element (60, 6.1) which can be adjusted by action of the driving force and is coupled with at least one further adjustable component (61; 6.5, 6.7; 62) of the adjusting mechanism (6) for generating the first and/or second adjusting force (F1, F2), in particular wherein the at least one further component (61; 6.5, 6.7) is pivotally or non-rotatably connected to the drive element (60, 6.1).

7. The fixing device according to claim 6, **characterized in that** the drive element (60, 6.1) is rotatably mounted about a drive axle (60A, 6.1A).

8. The fixing device according to claims 5 and 7, **characterized in that** the transmission element (62) is non-rotatably connected to the drive element (60) and is rotatable about the drive axle (60A) or a swivel axle of the lever element (611; 6.5, 6.7) is offset from the drive axle (60A, 6.1A).

9. The fixing device according to any of claims 6 to 8, **characterized in that** the drive element (60) includes a slotted link (600) on which a coupling element (76) connected to the locking element (7) is shiftably guided.

10. The fixing device according to claim 7 or 8 and according to claim 9, **characterized in that** the slotted link (600) on the drive element (60) extends around the drive axle (60A), in particular wherein the slotted link (600) of the drive element (60) defines a guideway for the coupling element (76), in which at least two areas have different distances (r1, r2) to the drive axle (60A).

11. The fixing device according to claim 8 and any of claims 9 or 10, **characterized in that** the transmission element (62) likewise includes a slotted link (620) which extends around the drive axle (60A), in particular wherein on the slotted link (620) of the transmission element (62) a connecting element (86) associated to the connector (5) is shiftably mounted, via which during a rotation of the transmission element (62) the second adjusting force (F2) can be applied for adjusting the connector (5).

12. The fixing device according to claim 5 and any of claims 6 to 8, **characterized in that** the drive element (6.1) is coupled with the locking element (7) and the connector (5) via a lever arrangement with at least two transmission levers (6.5, 6.7), in particular wherein the at least two transmission levers (6.5, 6.7) each are connected to the drive element (6.1) via a joint (G1, G2).

13. A vehicle, comprising
- an object (1, 1a, 1b, 1c) to be fixed,
- a body-mounted fixing surface (I) and
- at least one fixing device (3) according to any of claims 1 to 12 for fixing the object (1, 1a, 1b, 1c) on the fixing surface (I).

14. The vehicle according to claim 13, **characterized in that** the locking device (V) of the fixing device is provided on a body-mounted vehicle component or on the object (1, 1a, 1b, 1c) and/or the object comprises a vehicle seat (1, 1a, 1b, 1c), a table and/or a console.

15. A vehicle seat comprising a fixing device according to any of claims 1 to 12 for fixing the vehicle seat (1, 1a, 1b, 1c) on an interior surface (I) of the vehicle (F).

## Revendications

1. Dispositif de fixation pour une fixation d'un objet (1, 1a, 1b, 1c) sur une surface de fixation (I) dans un véhicule (F), comprenant
- au moins un élément de fixation (31) qui est formé pour fixer l'objet (1) avec une partie de fixation (311) qui est prévue pour un engagement dans une ouverture de fixation (O1), la partie de fixation (311) pouvant être introduite dans l'ouverture de fixation (O1) le long d'une direction d'introduction (E), et
- un dispositif de verrouillage (V) qui est adapté pour verrouiller l'élément de fixation (31) sur l'ouverture de fixation (O1) en interaction avec la partie de fixation (311) introduite dans l'ouverture de fixation (O1),
le dispositif de verrouillage (V) comprenant au moins un élément de verrouillage (7) déplaçable transversalement à la direction d'introduction (E), qui, pour le verrouillage de l'élément de fixation (31) sur l'ouverture de fixation (O1), peut être déplacé dans une position de verrouillage dans laquelle l'élément de verrouillage (7) bloque la partie de fixation (311) contre un retrait de l'ouverture de fixation (O1), et
le dispositif de verrouillage (V) comprenant au moins un connecteur (5) avec au moins un élément de mise en contact (55) et le connecteur (5) pouvant être déplacé dans une position de mise en contact pour une mise en contact électrique d'une partie de contact (315) de l'élément de fixation (31) introduit dans l'ouverture de fixation (O1) par le au moins un élément de mise en contact (55),
**caractérisé en ce que**
l'élément de verrouillage (7) et le connecteur (5) sont réglables l'un par rapport à l'autre et le dispositif de verrouillage (V) comprend un mécanisme de réglage (6) par lequel une force d'entraînement agissant sur le mécanisme de réglage (6) peut être convertie aussi bien en une première force de réglage (F1) pour déplacer l'élément de verrouillage (7) dans la position de verrouillage qu'en une deuxième force de réglage (F2) pour déplacer le connecteur (5) par rapport à l'élément de verrouillage (7) dans la position de mise en contact.

2. Dispositif de fixation selon la revendication 1, **caractérisé en ce que**, par l'intermédiaire du mécanisme de réglage (6) et sous l'effet de la force d'entraînement, l'élément de verrouillage (7) et le connecteur (5) peuvent être entraînés pour faire deux mouvements de réglage opposés l'un à l'autre, en particulier dans lequel
- d'une part, l'élément de verrouillage (7) peut être déplacé d'une position de libération dans la position de verrouillage par l'intermédiaire du mécanisme de réglage (6) sous l'effet de la force d'entraînement et, d'autre part, le connecteur (5) peut être déplacé à cet effet en sens inverse
a) d'une position initiale dans une position intermédiaire, à partir de laquelle le connecteur (5) peut être déplacé ensuite dans la position de mise en contact, ou
b) d'une position initiale dans la position de mise en contact,
et/ou
- par l'intermédiaire du mécanisme de réglage (6), l'élément de verrouillage (7) peut être déplacé le long d'un axe longitudinal (LA) dans une première direction de réglage (V1 ; V2) sous l'effet de la force d'entraînement, tandis que le connecteur (5) peut être déplacé le long de l'axe longitudinal (LA) dans une deuxième direction de réglage (V2) opposée à la première direction de réglage (V1) pour un mouvement de réglage opposé à celui-ci.

3. Dispositif de fixation selon la revendication 1 ou 2, **caractérisé en ce que** le connecteur (5) est monté de manière réglable sur l'élément de verrouillage (7), en particulier l'élément de verrouillage (7) présentant un guidage physique (75) pour le connecteur (5) monté de manière déplaçable sur l'élément de verrouillage (7).

4. Dispositif de fixation selon l'une quelconque des revendications précédentes, **caractérisé en ce que** le dispositif de verrouillage (V) comprend un élément de guidage (S) sur lequel l'élément de verrouillage (7) est monté de manière déplaçable, l'élément de verrouillage (7) en particulier étant monté de manière déplaçable le long d'un rail de guidage (S) s'étendant transversalement à la direction d'introduction (E).

5. Dispositif de fixation selon l'une quelconque des revendications précédentes, **caractérisé en ce que** le mécanisme de réglage (6) comprend au moins un élément de levier (611 ; 6.5, 6.7) monté de manière pivotante et/ou un élément de transmission (62) monté de manière rotative pour la transmission de la première et/ou deuxième force de réglage (F1, F2).

6. Dispositif de fixation selon l'une quelconque des revendications précédentes, **caractérisé en ce que** le mécanisme de réglage (6) comprend un élément d'entraînement (60, 6.1) qui est réglable sous l'effet de la force d'entraînement et qui est relié à au moins un autre composant réglable (61 ; 6.5, 6.7 ; 62) du mécanisme de réglage (6) pour générer la première et/ou deuxième force de réglage (F1, F2), en particulier dans lequel l'au moins un autre composant (61 ; 6.5, 6.7) est relié de manière articulée ou solidaire en rotation à l'élément d'entraînement (60, 6.1).

7. Dispositif de fixation selon la revendication 6, **caractérisé en ce que** l'élément d'entraînement (60, 6.1) est monté de manière rotative autour d'un axe d'entraînement (60A, 6.1A).

8. Dispositif de fixation selon les revendications 5 et 7, **caractérisé en ce que** l'élément de transmission (62) est relié de manière solidaire en rotation à l'élément d'entraînement (60) et peut tourner autour de l'axe d'entraînement (60A) ou un axe de pivotement de l'élément de levier (611 ; 6.5, 6.7) est décalé par rapport à l'axe d'entraînement (60A, 6.1A).

9. Dispositif de fixation selon l'une quelconque des revendications 6 à 8, **caractérisé en ce que** l'élément d'entraînement (60) présente une coulisse (600) sur laquelle est guidé de manière déplaçable un élément de couplage (76) relié à l'élément de verrouillage (7).

10. Dispositif de fixation selon la revendication 7 ou 8 et selon la revendication 9, **caractérisé en ce que** la coulisse (600) s'étend sur l'élément d'entraînement (60) autour de l'axe d'entraînement (60A), en particulier la coulisse (600) de l'élément d'entraînement (60) définissant une voie de guidage pour l'élément de couplage (76), dans laquelle au moins deux zones présentent des distances différentes (r1, r2) par rapport à l'axe d'entraînement (60A).

11. Dispositif de fixation selon la revendication 8 et l'une quelconque des revendications 9 ou 10, **caractérisé en ce que** l'élément de transmission (62) comporte également une coulisse (620) qui s'étend autour de l'axe d'entraînement (60A), en particulier un élément de liaison (86) associé au connecteur (5) étant monté de manière déplaçable sur la coulisse (620) de l'élément de transmission (62), par l'intermédiaire duquel, lors d'une rotation de l'élément de transmission (62), la deuxième force de réglage (F2) peut être appliquée pour régler le connecteur (5).

12. Dispositif de fixation selon la revendication 5 et l'une quelconque des revendications 6 à 8, **caractérisé en ce que** l'élément d'entraînement (6.1) est couplé à l'élément de verrouillage (7) et au connecteur (5) par l'intermédiaire d'un agencement de leviers comprenant au moins deux leviers de transmission (6.5, 6.7), en particulier dans lequel les au moins deux leviers de transmission (6.5, 6.7) sont chacun reliés à l'élément d'entraînement (6.1) par une articulation (G1, G2).

13. Véhicule, comprenant
- un objet à fixer (1, 1a, 1b, 1c)
- une surface de fixation (I) fixée à la carrosserie et
- au moins un dispositif de fixation selon l'une quelconque des revendications 1 à 12 pour la fixation de l'objet (1, 1a, 1b, 1c) sur la surface de fixation (I).

14. Véhicule selon la revendication 13, **caractérisé en ce que** le dispositif de verrouillage (V) du dispositif de fixation est prévu sur un composant de véhicule fixé à la carrosserie ou sur l'objet (1, 1a, 1b, 1c) et/ou l'objet comprend un siège de véhicule (1, 1a, 1b, 1c), une table et/ou une console.

15. Siège de véhicule comprenant un dispositif de fixation selon l'une quelconque des revendications 1 à 12 pour la fixation du siège de véhicule (1, 1a, 1b, 1c) sur une surface intérieure (I) du véhicule (F).
